# EUROPEAN PATENT APPLICATION

(11) **EP 4 730 091 A1**
(43) Date of publication of application: **22.04.2026**
(21) Application number: 24843299.9
(22) Date of filing: 03.06.2024
(51) Int. Cl.: G06F 3/04817, G06F 3/0482, G06F 3/04842, G06F 1/16, G06F 3/041

(54) **ELECTRONIC DEVICE AND METHOD FOR CHANGING DISPLAYING OF WIDGET**

(30) Priority: 20.07.2023 KR 20230094906; 29.08.2023 KR 20230113808
(71) Applicant: Samsung Electronics Co., Ltd., Suwon-si, Gyeonggi-do 16677 (KR)
(72) Inventor: YOO, Hyunwoo, Suwon-si Gyeonggi-do 16677 (KR); KIM, Wankyu, Suwon-si Gyeonggi-do 16677 (KR); OH, Boa, Suwon-si Gyeonggi-do 16677 (KR); SHIN, Jongwoo, Suwon-si Gyeonggi-do 16677 (KR); YIM, Soeyoun, Suwon-si Gyeonggi-do 16677 (KR); CHOI, Jungwoo, Suwon-si Gyeonggi-do 16677 (KR)
(74) Representative: HGF
(86) International application number: PCT/KR2024/007543
(87) International publication number: WO 2025/018578

(57) **Abstract**

An electronic device is provided. The electronic device may include a cover display for outputting a widget object. The electronic device may reduce a widget object on the cover display on the basis of a pinch gesture, display the widget object at a corresponding arrangement position in a layout, and move, subsequent to the reduction of the widget object, another widget object along a trajectory toward an arrangement position corresponding to the other widget object among a plurality of arrangement positions.

## Description

### TECHNICAL

### Field

The following disclosure relates to changing displaying a widget.

### BACKGROUND Art

With the development of display technology, various display devices, such as a flexible display device or a transparent display device, have been developed. The flexible display device may be used folded or unfolded depending on usage of a user, thereby significantly reducing the volume of an electronic device.

The flexible display device may be implemented as an organic light-emitting diode (OLED) display device or a liquid crystal display (LCD) device. For example, in a conventional LCD or OLED display device, a flexible display device may be manufactured using a flexible material, for example, replacing an organic substrate with a plastic film. In addition, in the conventional LCD or OLED display device, the foldable display device may be manufactured using a flexible material at least in a folded portion.

As the flexible display devices are used, various application fields have emerged. For example, the flexible display device may apply to electronic books that may replace publications, such as a magazine, a textbook, a book, and a comic book, and new portable information technology (IT) products, such as an ultra-small portable personal computer (PC) of which a display is folded or rolled, or a smart card for viewing information in real time. In this regard, there is demand for developing an interface for utilizing an advantage of the flexible display device while reflecting characteristics of the flexible display device.

### DISCLOSURE OF THE INVENTION

### TECHNICAL SOLUTIONS

An electronic device according to an example embodiment may include a housing, a display accommodated in the housing, and a processor operatively connected to the display. The processor may be configured to display a first execution screen corresponding to a first application on the display so that an execution outcome of a first function of one or more functions of the first application is presented as updated. The processor may be configured to, while the first execution screen is displayed on the display and a second execution screen corresponding to a second application is not displayed on the display, receive an input to the first execution screen. The processor may be configured to, based at least partially on the input, concurrently display a first reduced execution screen corresponding to the first execution screen and a second reduced execution screen corresponding to the second execution screen on the display. The concurrently displaying of the first reduced execution screen and the second reduced execution screen may include providing the execution outcome of the first function as additionally updated to the first reduced execution screen.

According to an example embodiment, an electronic device may include a housing, a display accommodated in the housing, a memory storing computer-executable instructions, and one or more processors accessing the memory and executing the instructions. The the instructions, when executed by the one or more processors, cause the one or more processors to, in a group of applications including a first application and a second application, display a first execution screen corresponding to the first application in a first size on the display. The instructions may cause the one or more processors to, while the first execution screen is displayed on the display and a second execution screen corresponding to the second application is not displayed on the display, receive a touch input to the first execution screen. The instructions may cause the one or more processors to, based at least partially on the touch input, display a group screen for the group of applications on the display. While the first execution screen is displayed in the first size, the second execution screen may not be displayed on the display. The first application and the second application may be respectively assigned to a first arrangement order and a second arrangement order that is different from the first arrangement order of arrangement orders with respect to the group of applications for a screen of the display. The displaying of the group screen may include displaying the first execution screen in a second size that is smaller than a first size at a first arrangement position corresponding to the first arrangement order in the group screen, and after the first execution screen is displayed as reduced in the second size, displaying a movement of the second execution screen in a size smaller than the first size at a second arrangement position corresponding to the second arrangement order in the group screen.

### BRIEF DESCRIPTION OF DRAWINGS

FIG. 1 is a block diagram illustrating an example electronic device in a network environment 100 according to various embodiments.
FIG. 2A is a diagram illustrating an example electronic device in an unfolded state according to various embodiments.
FIG. 2B is a diagram illustrating an example electronic device in a folded state according to various embodiments.
FIGS. 3A, 3B 3C and 3D are diagrams illustrating example widget objects according to various embodiments.
FIG. 4 is a flowchart illustrating an example method of transitioning a widget view according to various embodiments.
FIG. 5 is a diagram illustrating a transition from a single widget view to a multi-widget view according to various embodiments.
FIGS. 6, 7, 8, 9, 10 and 11 are diagrams illustrating examples of transition animations for each position index according to various embodiments.
FIG. 12 is a diagram illustrating an example operation in a multi-widget view according to various embodiments.
FIG. 13 is a diagram illustrating display update of a widget object according to various embodiments.
FIG. 14 is a diagram illustrating changing a layout according to various embodiments.
FIG. 15 is a diagram illustrating adding a widget object according to various embodiments.
FIG. 16 is a diagram illustrating deleting a widget according to various embodiments.
FIG. 17 is a diagram illustrating changing an arrangement position of a widget object according to various embodiments.
FIG. 18 is a diagram illustrating grouping widget objects according to various embodiments.
FIG. 19 is a diagram illustrating viewing widget details according to various embodiments.
FIG. 20 is a diagram illustrating vertical scroll of widget objects according to various embodiments.
FIG. 21 is a diagram illustrating horizontal scroll of widget objects according to various embodiments.
FIGS. 22 and 23 are diagrams illustrating visualization of widget objects in a multi-widget view according to various embodiments.
FIG. 24 is a diagram illustrating a transition from a single widget view to a multi-widget view according to various embodiments.
FIGS. 25 and 26 are diagrams illustrating transitions between a single widget view and a multi-widget view according to various embodiments.
FIGS. 27 and 28 are diagrams illustrating screen updates in a multi-widget view according to various embodiments.
FIGS. 29 and 30 are diagrams illustrating outputting a multi-widget view in a foldable display according to various embodiments.

### BEST MODE FOR CARRYING OUT THE INVENTION

Hereinafter, embodiments will be described in detail with reference to the accompanying drawings. When describing the embodiments with reference to the accompanying drawings, like reference numerals refer to like elements and a repeated description related thereto will be omitted.

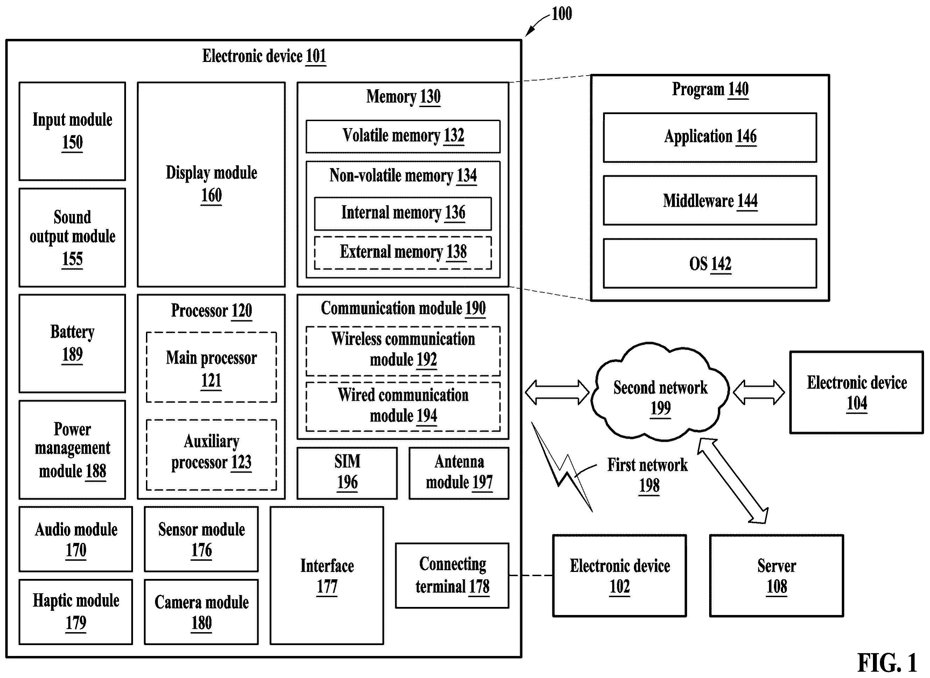

FIG. 1 is a block diagram illustrating an example electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added to the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an ISPISP or a CP) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch. According to various embodiments, the display may be accommodated in a housing of an electronic device. The display may be operatively connected to the processor.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102) (e.g., a speaker or headphone) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, ISPs, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., the AP) and support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a PCB, a RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-Things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

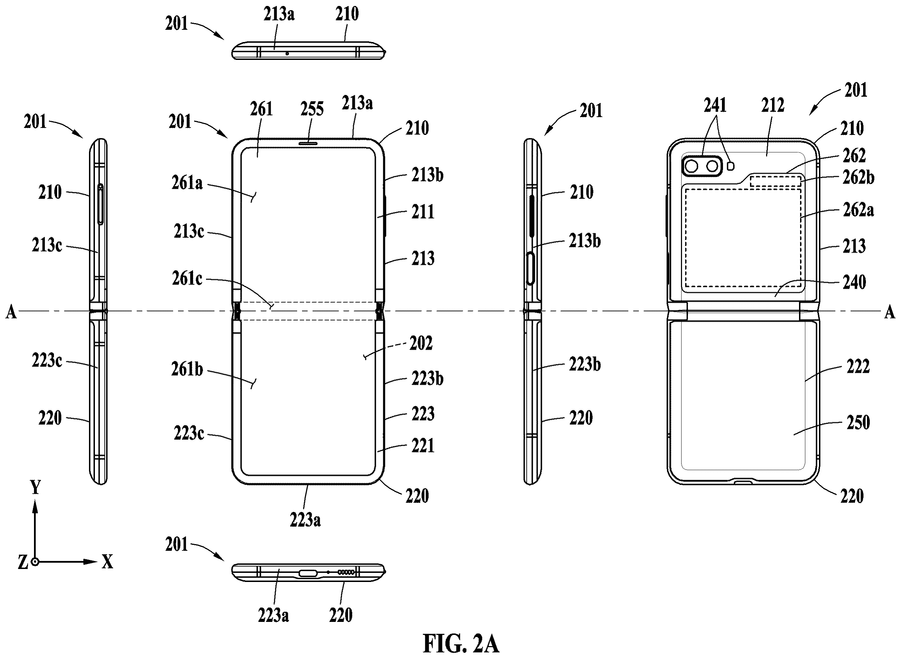

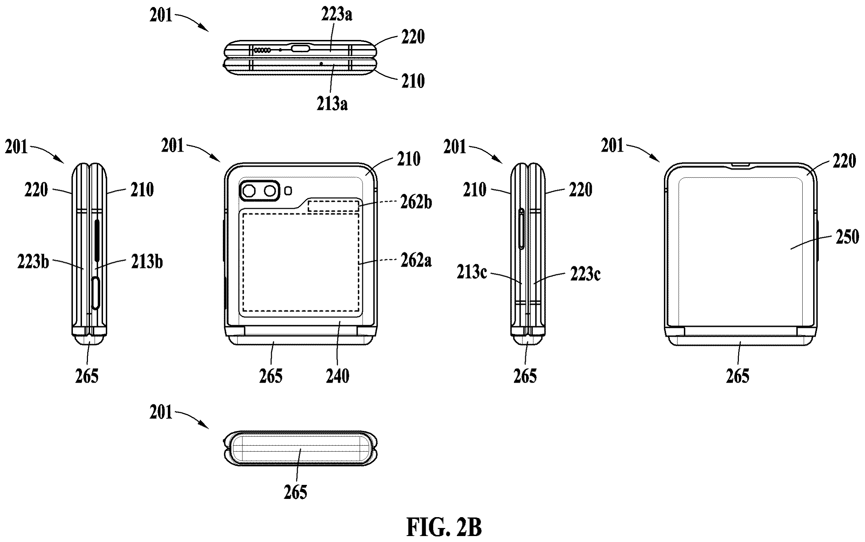

FIG. 2A is a diagram illustrating an example electronic device in an unfolded state according to various embodiments, and FIG. 2B is a diagram illustrating the electronic device of FIG. 2A in a folded state according to various embodiments.

Referring to FIGS. 2A and 2B, a foldable electronic device 201 may include a pair of housings 210 and 220 rotatably coupled to each other through a hinge structure to be folded with respect to each other, a hinge cover 265 for covering foldable portions of the pair of housings 210 and 220, and a display 261 (e.g., a flexible display or a foldable display) disposed in a space formed by the pair of housings 210 and 220. In the present disclosure, a surface on which the display 261 (e.g., a main display) is disposed may be defined as a front surface of the foldable electronic device 201, and a surface opposite to the front surface may be defined as a rear surface of the foldable electronic device 201. In addition, a surface surrounding a space between the front surface and the rear surface may be defined as a side surface of the foldable electronic device 201.

In an embodiment, the foldable electronic device 201 may include the first housing 210, the second housing 220, a first rear cover 240, and a second rear cover 250. The pair of housings 210 and 220 of the electronic device 201 are not limited to the shapes or the combination and/or coupling of components shown in FIGS. 2A and 2B, and may be implemented in other shapes or by another combination and/or coupling of components.

In an embodiment, the first housing 210 and the second housing 220 may be disposed on both sides (e.g., an upper portion and a lower portion) based on a folding axis A, and may be disposed substantially symmetrically relative to the folding axis A. In an embodiment, an angle and/or a distance between the first housing 210 and the second housing 220 may vary depending on whether the electronic device 201 is in an unfolded state, a folded state, or an intermediate state.

In an embodiment, the first housing 210 may be connected to a hinge structure in the unfolded state of the electronic device 201. The first housing 210 may include a first surface 211 facing the front surface of the electronic device 201, a second surface 212 facing a direction opposite to the first surface 211, and a first side portion 213 enclosing at least a portion of a space between the first surface 211 and the second surface 212. The first side member 213 may include a first side surface 213a disposed substantially in parallel with the folding axis A, a second side surface 213b extending in a direction substantially perpendicular to the folding axis A from one end of the first side surface 213a, and a third side surface 213c extending in a direction substantially perpendicular to the folding axis A from another end of the first side surface 213a and substantially parallel to the second side surface 213b. The second housing 220 may be connected to the hinge structure in the unfolded state of the electronic device 201. The second housing 220 may include a third surface 221 facing the front surface of the electronic device 201, a fourth surface 222 facing a direction opposite to the third surface 221, and a second side portion 223 enclosing at least a portion of a space between the third surface 221 and the fourth surface 222. The second side member 223 may include a fourth side surface 223a disposed substantially in parallel with the folding axis A, a fifth side surface 223b extending in a direction substantially perpendicular to the folding axis A from one end of the fourth side surface 223a, and a sixth side surface 223c extending in a direction substantially perpendicular to the folding axis A from another end of the fourth side surface 223a and substantially parallel to the fifth side surface 223b. The first surface 211 and the third surface 221 may face each other when the electronic device 201 is in the folded state.

In an embodiment, the electronic device 201 may include a recessed accommodating portion 202 for accommodating the display 261 through the structural coupling of the first housing 210 and the second housing 220. The accommodating portion 202 may have substantially the same size as the display 261.

In an embodiment, at least a portion of the first housing 210 and the second housing 220 may be formed of a metal material or a non-metal material having a predetermined magnitude of rigidity appropriate to support the display 261.

In an embodiment, the electronic device 201 may include a sound output module 255 (e.g., the sound output module 155) (e.g., the sound output module 155) disposed through at least a partial area of the first surface 211.

In an embodiment, the first rear cover 240 may be disposed on the second surface 212 of the first housing 210, and may have a substantially rectangular periphery. At least a portion of the periphery of the first rear cover 240 may be surrounded by the first housing 210. The second rear cover 250 may be disposed on the fourth surface 222 of the second housing 220, and may have a substantially rectangular periphery. At least a portion of the periphery of the second rear cover 250 may be surrounded by the second housing 220.

In an embodiment, the first rear cover 240 and the second rear cover 250 may have substantially symmetrical shapes with respect to the folding axis A. In an embodiment, the first rear cover 240 and the second rear cover 250 may have different shapes.

In an embodiment, the first housing 210 and the first rear cover 240 may be detachably connected, coupled, or bonded to each other, and the second housing 220 and the second rear cover 250 may be detachably connected, coupled, or bonded to each other. In an embodiment, the first housing 210 and the first rear cover 240 may be integrally formed, and the second housing 220 and the second rear cover 250 may be integrally formed.

In an embodiment, the first housing 210, the second housing 220, the first rear cover 240, and the second rear cover 250 may provide a space in which various components (e.g., a PCB, the antenna module 197, the sensor module 176, or the battery 189) of the electronic device 201 may be arranged through a structure in which the first housing 210, the second housing 220, the first rear cover 240, and the second rear cover 250 are coupled to one another. In an embodiment, at least one component may be visually exposed on the rear surface of the electronic device 201. For example, at least one component may be visually exposed through a first rear area 241 of the first rear cover 240. In this case, the component may include a proximity sensor, a rear camera module, and/or a flash. The display 261 (e.g., the main display) may be disposed on the front surface of the electronic device 201, and a sub-display 262 may be disposed on the rear surface of the electronic device 201. In an embodiment, at least a portion of the sub-display 262 may be visible on the first rear cover 240.

In an embodiment, the display 261 may be disposed in the accommodating portion 202 formed by the pair of housings 210 and 220. For example, the display 261 may be arranged to occupy substantially most of the front surface of the electronic device 201. The front surface of the electronic device 201 may include an area in which the display 261 is disposed, and a partial area (e.g., an edge area) of the first housing 210 and a partial area (e.g., an edge area) of the second housing 220, which are adjacent to the display 261. The rear surface of the electronic device 201 may include the first rear cover 240, a partial area (e.g., a periphery area) of the first housing 210 adjacent to the first rear cover 240, the second rear cover 250, and a partial area (e.g., a periphery area) of the second housing 220 adjacent to the second rear cover 250. In an embodiment, the display 261 may be a display in which at least one area is deformable into a planar surface or a curved surface. In an embodiment, the display 261 may include a folding area 261c, a first area 261a on a first side (e.g., the upper side) of the folding area 261c, and a second area 261b on a second side (e.g., the lower side) of the folding area 261c. For example, the first area 261a may be disposed in the first surface 211 of the first housing 210, and the second area 261b may be disposed in the third surface 221 of the second housing 220. However, the area division of the display 261 is merely an example, and the display 261 may be divided into a plurality of areas depending on the structure or functions of the display 261. For example, as shown in FIG. 2A, the display 261 may be divided into areas based on the folding axis A or the folding area 261c extending in parallel to an x-axis, or the display 261 may be divided into areas based on another folding area (e.g., a folding area extending in parallel to an y-axis) or another folding axis (e.g., a folding axis parallel to the y-axis). The area division of the display 261 as above is merely physical division based on the pair of housings 210 and 220 and the hinge structure, and the display 261 may display substantially one screen through the pair of housings 210 and 220 and the hinge structure. In an example embodiment, the first area 261a and the second area 261b may have substantially symmetrical shapes with respect to the folding area 261c.

In an embodiment, the hinge cover 265 may be disposed between the first housing 210 and the second housing 220 and configured to cover the hinge structure. The hinge cover 265 may be hidden by at least a portion of the first housing 210 and the second housing 220 or exposed to the outside according to the operating state of the electronic device 201. For example, as shown in FIG. 2A, when the electronic device 201 is in the unfolded state, a hinge cover (e.g., the hinge cover 265 of FIG. 2B) may not be exposed to the outside as the hinge cover is occluded by the first housing 210 and the second housing 220, and when the electronic device 201 is in the folded state, the hinge cover 265 may be exposed to the outside between the first housing 210 and the second housing 220. When the electronic device 201 is in an intermediate state in which the first housing 210 and the second housing 220 form an angle with each other, at least a portion of the hinge cover 265 may be exposed to the outside between the first housing 210 and the second housing 220. In this case, an area of the hinge cover 265 exposed to the outside may be smaller than the area of the hinge cover 265 exposed when the electronic device 201 is in the folded state. In an embodiment, the hinge cover 265 may have a curved surface.

Describing the operation of the electronic device 201, when the electronic device 201 is in an unfolded state (e.g., the state of the electronic device 201 of FIG. 2A), the first housing 210 and the second housing 220 may form a first angle (e.g., about 180 degrees) with each other, and the first area 261a and the second area 261b of the display 261 may be oriented in substantially the same direction. The folding area 261c of the display 261 may be on substantially the same plane as the first area 261a and the second area 261b. In an embodiment, when the electronic device 201 is in the unfolded state, as the first housing 210 rotates at a second angle (e.g., about 360 degrees) relative to the second housing 220, the second surface 212 and the fourth surface 222 may face each other. When the electronic device 201 is in the folded state (e.g., the state of the electronic device 201 of FIG. 2B), the first housing 210 and the second housing 220 may face each other. The first housing 210 and the second housing 220 may form an angle of about 0 degrees to about 10 degrees, and the first area 261a and the second area 261b of the display 261 may face each other. At least a portion of the folding area 261c of the display 261 may be deformed into a curved surface. When the electronic device 201 is in the intermediate state, the first housing 210 and the second housing 220 may form a predetermined angle with each other. An angle (e.g., a third angle, about 90 degrees) formed by the first area 261a and the second area 261b of the display 261 may be greater than that when the electronic device 201 is in the folded state and less than that when the electronic device 201 is in the unfolded state. At least a portion of the folding area 261c of the display 261 may be deformed into a curved surface. In this case, a curvature of the curved surface of the folding area 261c may be smaller than that when the electronic device 201 is in the folded state.

A screen area of the sub-display 262 may include a first area 262a and a second area 262b. For example, the screen area may be an area where various objects and graphic representations are drawn. The second area 262b may have a shape protruding from an edge of the first area 262a and may be referred to as an L-cut area. In FIGS. 2A and 2B, the second area 262b may be an area protruding from an edge adjacent to the first rear area 241 among edges of the first area 262a. For example, the edge of the first area 262a adjacent to the first rear area 241 may be connected to an inclined edge of the second area 262b. The edge connected to the inclined edge of the second area 262b may be parallel to an edge adjacent to the hinge in the first area 262a. However, this is only an example, and the shapes of the first area 262a and the second area 262b forming the screen area of the sub-display 262 may vary depending on the design. The Equation 1 area 262a and the second area 262b may be designed so that the sub-display 262 may occupy an area other than an area occupied by other components (e.g., the camera) on the surface in which the sub-display 262 is disposed, as much as possible. The second area 262b may include a notch area of the camera. In addition, the area division of the sub-display 262 as described above is based on the shape only for ease of description, and the two areas of the sub-display 262 may display a substantially single screen. The sub-display 262 may display a screen mainly when the electronic device 201 is in the folded state, but the example is not limited thereto.

Various embodiments of the electronic device described herein are not limited to a form factor of the electronic device 201 described with reference to FIGS. 2A and 2B, and may also apply to electronic devices with various form factors.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include code generated by a compiler or code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

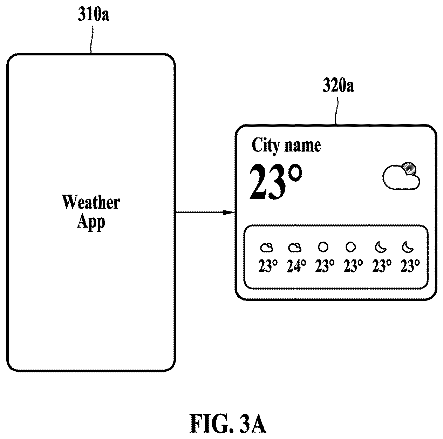

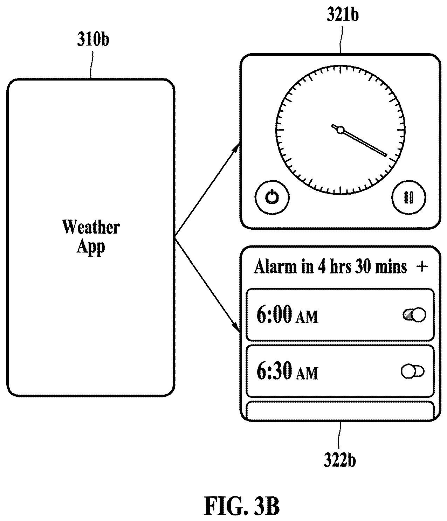

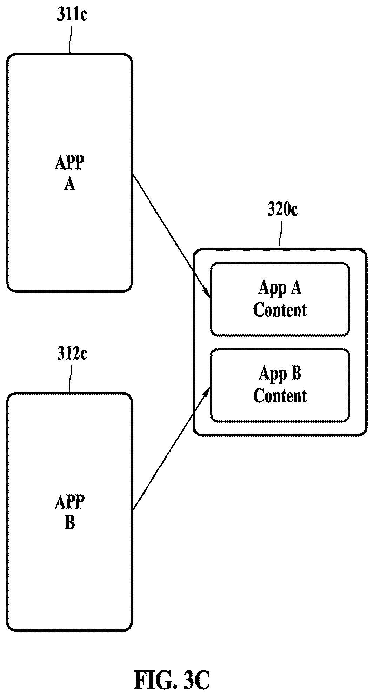

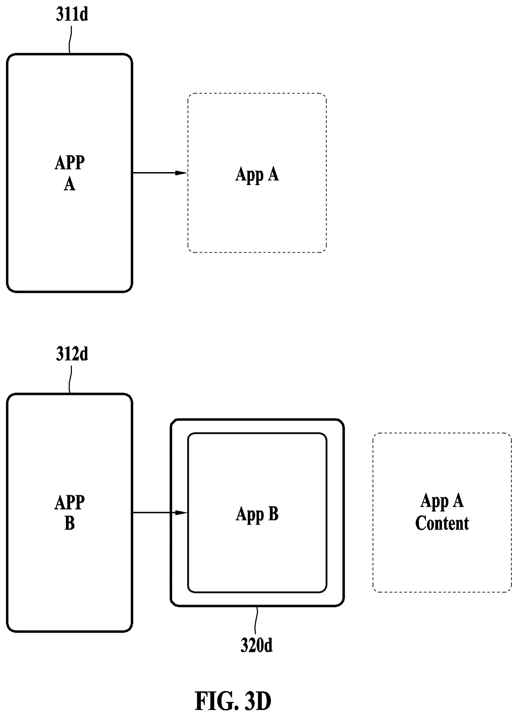

FIGS. 3A, 3B, 3C and 3D are diagrams illustrating a widget object according to various embodiments.

According to various embodiments, a widget object may be an object corresponding to a graphic representation that visualizes a widget application on a screen of a display (e.g., the sub-display) and may also be referred to as a widget graphic representation. The widget application may be a third application (e.g., a small application) embedded in a first application (e.g., a cover screen application, a home screen application, a wearable watch home widget application, a note personal computer (PC) home widget application, or a tablet home widget application) to obtain an update according to at least one of an event or periodicity from one or more second applications. The second application may include a music playback application, a schedule management application, a calendar application, a stopwatch application, a timer application, an alarm application, a weather application, a health record (e.g., a step count) application, a call application, a peripheral device (e.g., wireless earphones) management application, and/or a recorder application. However, this is only an example, and the second application is not limited thereto.

The second application may be, for example, an application in which a widget function is enabled among applications installed in an electronic device. The electronic device may select one or more second applications from applications in which widget functions are enabled based on a user input (e.g., a widget additional input). For example, the electronic device may generate a widget application that provides at least one of an operation, a function, or information about the selected one or more second applications and may add or embed the generated widget application in the first application (e.g., the cover screen application or the home screen application). The widget application may be executed together with the first application.

For example, FIG. 3A illustrates an example in which a single widget is derived from a single application. A second application 310a may be a weather application, and a single widget application 320a may provide weather information. FIG. 3B illustrates an example in which a plurality of widgets is derived from a single application. A second application 310b may be a clock application, a first widget application 321b may provide a stopwatch function of the clock, and a second widget application 322b may provide an alarm function of the clock. FIG. 3C illustrates an example in which a single widget is derived from multiple applications. A widget 320c that provides content A and content B may be generated from an application A 311c and an application B 312c. FIG. 3C illustrates an example in which information about multiple applications is output on a screen area (or a widget area). FIG. 3D illustrates an example in which a widget 320d displays content of one of an application A 311d and an application B 312d, which are linked to the widget 320d.

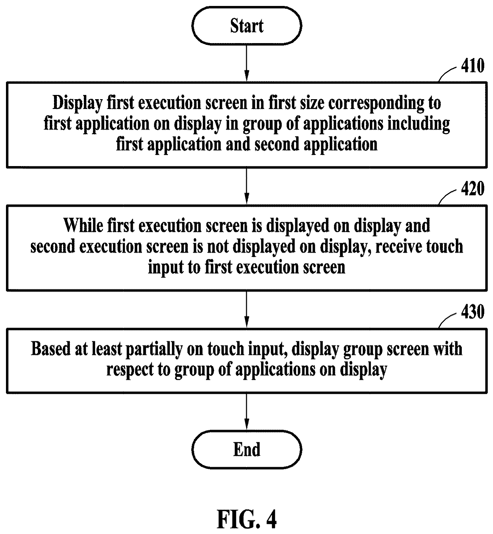

FIG. 4 is a flowchart illustrating an example method of transitioning a widget view according to various embodiments.

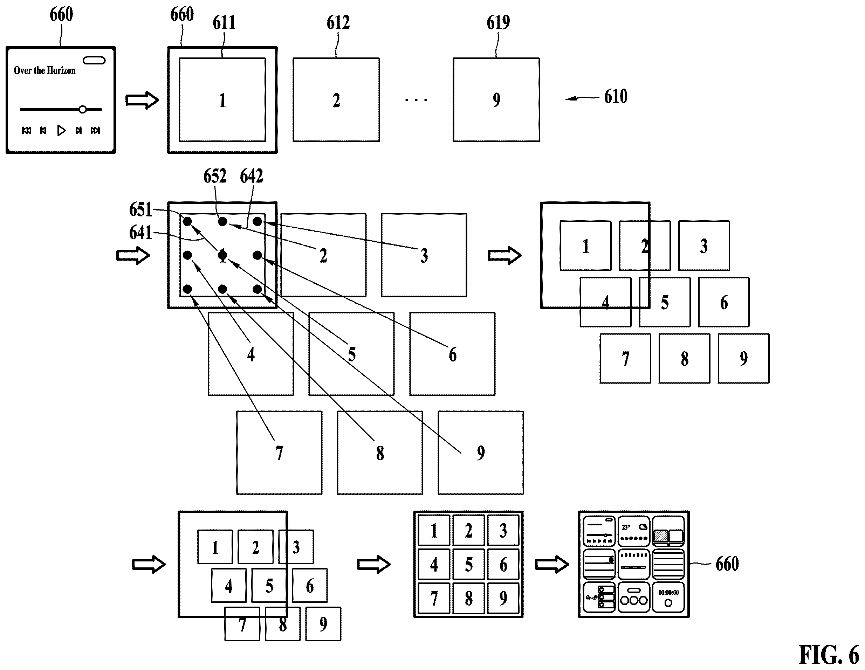

In operation 410, in a group of applications including a first application and a second application, an electronic device (e.g., the electronic device 201 of FIGS. 2A and 2B) may display a first execution screen corresponding to the first application in a first size on a display. While the first execution screen is displayed in the first size, a second execution screen corresponding to the second application may not be displayed on the display. The first application and the second application may be respectively assigned to a first arrangement order and a second arrangement order, which is different from the first arrangement order, of arrangement orders for the group of applications with respect to the screen of the display. An arrangement order of an application may be the order in which the application is arranged in a group, and the arrangement order may be referred to as an arrangement sequence. The arrangement sequence is further described with reference to FIG. 6 below.

The execution screen may indicate a screen in which the application is executed. The first size may indicate a default size that the execution screen occupies on the display when executing the application. The first size may vary depending on a user input or settings. In the present disclosure, an example in which the application is a widget application and the execution screen is a widget object corresponding to the widget application is illustrated. However, the example is not limited thereto, and the execution screen may be a screen in which a different type of application is executed.

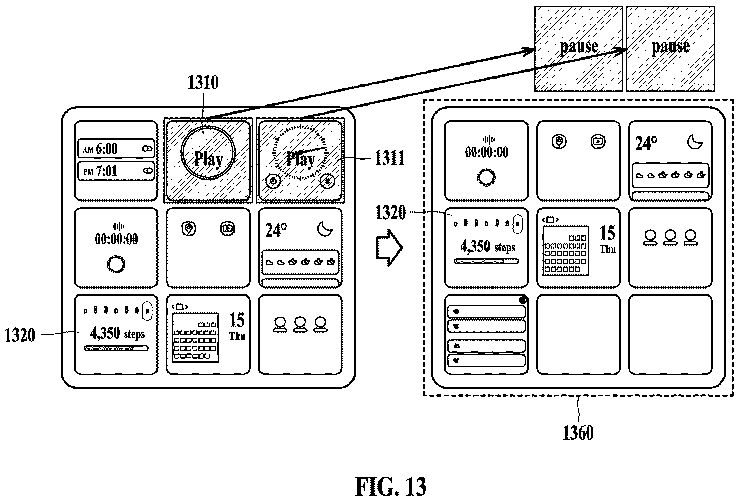

For example, the electronic device may output a widget object via a cover display. When information (e.g., weather information) is updated from the second application (e.g., a weather application) while executing a widget application linked with the second application, the electronic device may update a graphic representation of a widget object. However, as described below with reference to FIG. 13, when the widget object is deviated from a screen area, updating the graphic representation of the widget object may be suspended. However, regardless of the suspension of updating the graphic representation, the electronic device may continue to operate the widget application.

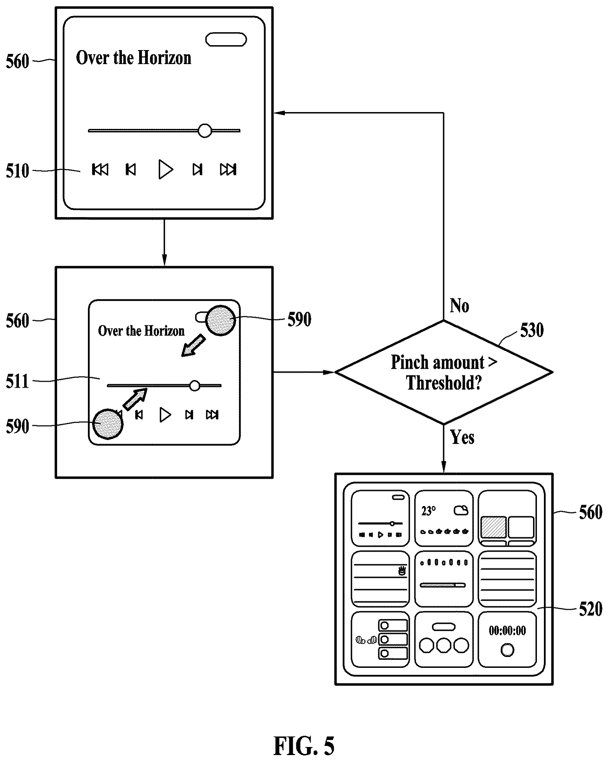

The widget object corresponding to the widget application may be displayed as a single widget view or a multi-widget view. For example, the electronic device may output the widget object on all or most of the screen area of the display (e.g., the sub-display). For reference, the multi-widget view may be a screen that corresponds to the group of applications and may also be referred to as a group screen. The multi-widget view is described in greater detail below with reference to FIG. 5.

In operation 420, while the first execution screen is displayed on the display and the second execution screen corresponding to the second application is not displayed on the display, the electronic device may receive a touch input to the first execution screen. The touch input may be, for example, an input in which touch positions are formed and the formed touch points are moved. The electronic device may identify a pinch zoom-out touch to the first execution screen as the input to the first execution screen.

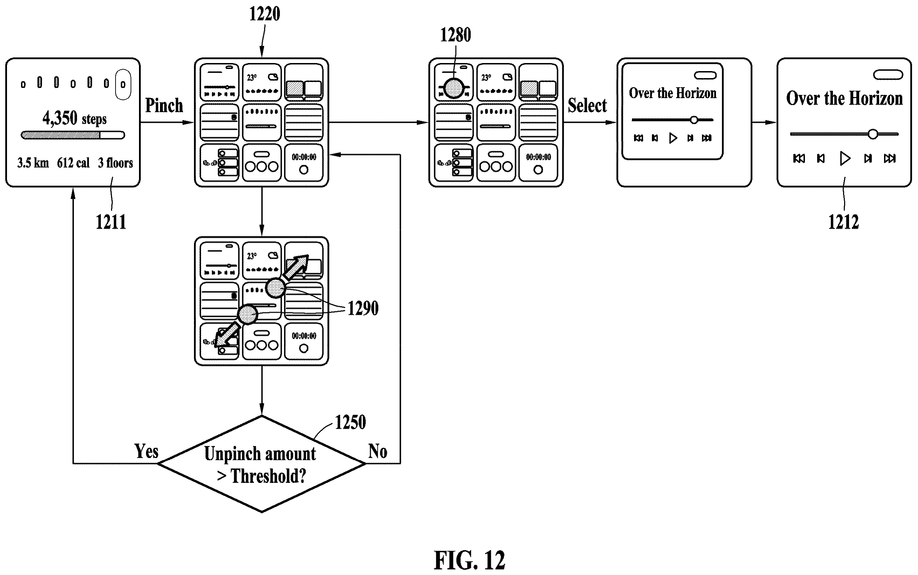

For example, based on at least one of a change in a distance (also referred to as a distance change) between two or more pointing positions approaching each other on a cover display (e.g., the sub-display 262 of FIG. 2A) or a moving speed thereof, the electronic device may contract the widget object displayed on the cover display. The pointing input may be an input that indicates a point in the screen area of a display (e.g., the cover display or main display). For example, the pointing input may include at least one of a touch input, a hovering input, an input based on gaze tracking, an input based on tracking a motion of a user, or an input by a pointing device (e.g., a mouse or an external controller). The touch input may be an input identified based on detecting contact (e.g., a finger or a stylus pen) between a touch device (e.g., a touch screen) and an object. The input in which two or more pointing positions approach each other may be referred to as a pinch gesture or pinch zoom-out. The pinch gesture is described with reference to FIG. 5 below, and an unpinch gesture, which is the reverse of the pinch gesture, is described in greater detail below with reference to FIG. 12.

In operation 430, based at least partially on the touch input, the electronic device may display the group screen with respect to the group of applications on the display. When the pinch zoom-out touch falls within a specified range, the electronic device may the first execution screen as reduced in a second size, which is smaller than the first size, from the first size. For example, the electronic device may display the first execution screen in the second size that is reduced from the first size, at a first arrangement position in the group screen corresponding to a first arrangement order. The second size may be smaller than the first size. The execution screen in the second size may be referred to as a reduced execution screen. As a part of an operation of displaying the first execution screen in the second size at the first arrangement position, the electronic device may display a moving graphical image in which the second size is gradually reduced to a specified size. An arrangement position in the group screen of an arbitrary application may be determined based on an arrangement order of the application in the group.

For example, the electronic device may display a widget object at an arrangement position corresponding to the widget object among a plurality of arrangement positions defined in a layout set in the screen of the cover display, based on the distance change between pointing positions. According to various embodiments, the electronic device may position the widget object at the corresponding arrangement position by applying transition animation based on the distance change between pointing positions. The arrangement position may be a position in which each widget object is arranged in the multi-widget view and may be determined based on a layout defined for the screen area. In the present disclosure, the layout may be mainly in the form of a grid, and the arrangement position may be a position corresponding to a vertex of each space in the grid. However, the layout is not limited thereto and may vary depending on the design.

For example, based on that the distance between pointing positions further decreases while the size of the widget object reaches the specified size, the electronic device may move the reduced widget object (e.g., a focus widget object) to the corresponding arrangement position. In another example, when the arrangement position corresponding to the reduced widget object is the center, the electronic device may reduce the size of the widget object without moving the widget object. In addition, the example in which transition animation is applied based on the size of the widget object is described, but is not limited thereto.

In another example, based on that the distance change between two or more pointing positions reaches a threshold distance change or the velocity reaches a threshold speed, the electronic device may initiate transition from the single widget view to the multi-widget view. The electronic device may also apply the transition animation to the widget object based on a pinch amount (e.g., a pinch distance or pinch speed) of a pinch input exceeding a threshold (e.g., a threshold distance change or threshold speed). The pinch distance may be a changed distance between two or more pointing positions according to a pinch gesture. The pinch velocity may be a moving speed or a distance change rate between two or more pointing positions according to the pinch gesture. The transition animation may include at least one of moving a widget, deforming the widget, or changing the size of the widget and may vary depending on a widget index of the widget object to be reduced. The transition animation for each widget index is described in greater detail below with reference to FIGS. 6 to 11.

The layout may be a form or pattern in which widget objects are arranged in the multi-widget view and may be defined by arrangement positions of the widget objects in the screen area. The layout may be, for example, in the form of a grid and is described in greater detail below with reference to FIG. 5. The present disclosure illustrates a layout in the form of a 3×3 grid, but is not limited thereto.

For reference, the present disclosure illustrates an example in which transition from the single widget view to the multi-widget view is triggered by the distance change between pointing positions, but the example is not limited thereto. In another example, based on reducing the size of the widget object to a specified size, the electronic device may display the widget object at the arrangement position corresponding to the widget object among the plurality of arrangement positions defined in the layout set in the screen of the cover display.

According to an embodiment, after the first execution screen is displayed as reduced to the second size, the electronic device may display a movement of the second execution screen in a smaller size (e.g., the second size) than the first size to a second arrangement position in the group screen corresponding to the second arrangement order. For example, subsequently to the reduction of the widget object, the electronic device may move another widget object along a path (or a trajectory) to an arrangement position corresponding to the widget object among the plurality of arrangement positions. The movements of the execution screens to the respective arrangement positions may follow the path. The path (or trajectory) may include a straight line, a curved line, or a combination thereof. The path (or trajectory) may not be visualized on the display.

Based on the distance between the pointing positions being further reduced after the widget object is reduced to the specific size, the electronic device may initiate moving the other widget object. The electronic device may determine an arrangement position corresponding to the widget object based on a widget index in an arrangement sequence of each widget object and a layout determined for the screen area of the cover display. The electronic device may determine a transition initial position of each widget object and may determine a trajectory to the arrangement position from the transition initial position. The electronic device may display the widget object at the arrangement position by moving each widget object along the corresponding trajectory. As described above, the electronic device may move the other widget object after reducing and/or moving the widget object (e.g., the focus widget object) that is reduced first. The electronic device may apply additional animation (e.g., a rotation effect, an appearing effect, or a fade-in effect) while moving the other widget object along the trajectory to the corresponding position in the layout.

Accordingly, the electronic device may perform transition from the single widget view in operation 410 to the multi-widget view through operations 420 and 430 described above. For example, the electronic device may output the corresponding widget object in split areas (e.g., slot areas) of the screen area of the display (e.g., the sub-display) in the multi-widget view. Each slot area may be an area defined based on the arrangement position in the screen area in the layout, and a widget object may be disposed therein.

For reference, the present disclosure illustrates displaying a widget object and transitioning a view in the cover display, but the example is not limited thereto. Unless otherwise described, the widget object may be displayed and the view may be transitioned identically or similarly on a main display (e.g., the display 261 of FIG. 2A). For example, a widget view (e.g., the single widget view or the multi-widget view) may be displayed on the screen area in the cover display, but on the main display, the widget view may be displayed on a partial area (e.g., a widget area) of the screen area. An area occupied by the widget view on a the main display may be referred to as a widget area. When displaying the widget view on the main display, the electronic device may perform view transition based on a gesture input (e.g., a pinch gesture or an unpinch gesture) in the widget area.

According to various embodiments, the electronic device may provide a convenient interface (e.g., the multi-widget view) that allows to view multiple widget objects together on a single screen through the pinch gesture. The electronic device may also return to the screen corresponding to the widget object that was previously displayed through the unpinch gesture. Accordingly, when a plurality of widget applications is executed in a home screen application (e.g., the cover home screen application or the main home screen application), the electronic device may provide users with the convenience of rapid widget navigation.

FIG. 5 is a diagram illustrating a transition from a single widget view to a multi-widget view according to various embodiments.

According to various embodiments, an electronic device (e.g., the electronic device 201 of FIGS. 2A and 2B) may display a widget object 511 on a display (e.g., the sub-display 262 of FIGS. 2A and 2B). The electronic device may output the widget object 511 in a single widget view 510. The widget object 511 displayed in the single widget view 510 on a screen area 560 of the display may be referred to as a focus widget object.

The electronic device may provide visual feedback in which the widget object 511 is pinched while detecting a pinch gesture 590. Based on detecting the pinch gesture 590 while displaying the focus widget object, the electronic device may reduce the size of the focus widget object. For example, as two or more pointing positions approach each other, the electronic device may reduce the size of the widget object 511 based on a reduced distance. The electronic device may determine an amount of size reduction of the widget object 511 based on an amount of distance reduced between the two or more pointing positions.

In operation 530, the electronic device may determine whether a pinch amount exceeds a threshold. For example, the electronic device may determine whether a pinch distance exceeds a threshold distance change (e.g., 30 density-independent pixel (DP)) or a pinch speed exceeds a threshold speed. For example, based on the distance change between the two or more pointing positions exceeding the threshold distance change, the electronic device may continue to reduce the size of the widget object 511. **In** another example, based on the moving speed or distance change speed of the two or more pointing positions exceeding the threshold speed, the electronic device may continue to reduce the size of the widget object 511.

However, the example is not limited thereto, and the pinch amount may be an amount calculated based on at least one of the pinch distance or the pinch speed. For example, the electronic device may determine a weight for the pinch speed based on the pinch distance and the size (e.g., an axial length) of the display. The electronic device may calculate the pinch amount based on the calculated weight and the pinch speed and may compare the calculate pinch amount with the threshold. Even when the pinch distance is the same, for the pinch gesture 590 with slow pinch speed, layout transition may not be performed, and for the pinch gesture 590 with fast pinch speed, the layout transition may be performed. Accordingly, the electronic device may transition the screen to a multi-widget view 520 based on detecting the pinch gesture 590 with sufficient pinch speed even if a pinch distance is relatively short compared to the relatively large display.

When the pinch gesture 590 satisfies (e.g., reaches the threshold) a threshold condition, the electronic device may provide feedback. For example, the electronic device may visualize transition animation from the single widget view 510 to the multi-widget view 520 while providing at least one of haptic feedback (e.g., vibration) or acoustic feedback (e.g., sound).

The electronic device may output widget objects corresponding to a plurality of widget applications embedded and executed in a first application, on a single screen via the multi-widget view 520. The electronic device may position the widget objects at respective arrangement positions following the layout. For reference, in the multi-widget view 520, the electronic device may overlay and output the widget objects on a cover home widget. The electronic device may blur and output the cover home widget as background. The cover home widget may be a widget set as default for a cover home screen application and may be, for example, a clock face widget.

Based on the pinch amount less than the threshold, the electronic device may return to a previous screen. For example, based on the pointing position being released before the pinch amount reaches the threshold, the electronic device may revert the reduced focus widget object to the original size.

As described above, the transition animation may vary depending on a widget index of the widget object. The electronic device may dynamically change the transition animation for each position index, wherein the transition animation allows a user to visually predict a position where the reduced widget object is moved. In FIGS. 6 to 11 below, examples of transition animations are described in greater detail.

FIGS. 6, 7, 8, 9, 10 and 11 illustrate examples of transition animations for each position index according to various embodiments.

For example, a layout may be in the form of a grid, and positions forming the grid may be determined to be arrangement positions. An electronic device (e.g., the electronic device 201 of FIGS. 2A and 2B) may determine a non-overlapping path with a widget object in transition animation to be a moving trajectory of another widget object.

FIG. 6 illustrates an example in which an arrangement position of a widget object according to various embodiments is not the center.

The electronic device (e.g., the electronic device 201 of FIGS. 2A and 2B) may display the widget object in a single widget view in a screen area 660. As described above with reference to FIG. 5, the electronic device may reduce the size of the widget object in response to a pinch gesture. The electronic device may initiate transition animation based on detecting a pinch gesture satisfying a threshold condition.

Based on the pinch gesture satisfying (e.g., the pinch amount reaches the threshold) the threshold condition, the electronic device may arrange the widget object of an arrangement sequence 610 based on a focus widget object. The arrangement sequence 610 may indicate an arrangement order of one or more widget objects. In FIG. 6, an example in which the arrangement sequence 610 includes a first widget object to a ninth widget object 611, 612 to 619, and the first widget object 611 is a focus widget object, is illustrated.

The electronic device may determine widget object to be exposed to the screen area 660 based on the arrangement sequence 610 and a focused widget object. For example, the electronic device may determine a vertical position in which the focus widget object is disposed in the layout based on a quotient obtained by dividing a widget index of the focus widget object by a number specified to an individual line (e.g., a row line) of the layout. Based on the vertical position, the electronic device may select a widget object preceding the focus widget object and a widget object succeeding the focus widget object to be exposed together with the focus widget object. The electronic device may select widget objects belonging to front and rear lines based on a line to which the focus widget object belongs so that the focus widget object is vertically centered. The electronic device may determine a horizontal position in which the focus widget object is disposed in the layout based on a remainder obtained by dividing a focus widget index by a number specified to an individual line. For reference, in FIG. 6, since the total number of widget objects is less than or equal to the number that the layout may represent, the electronic device may determine to expose all widget objects (e.g., the first to ninth widget objects 611 to 619). The electronic device may map the widget objects determined to be exposed to respective arrangement positions of the layout.

When the layout is in the form of a grid, the electronic device may divide a widget object included in the arrangement sequence 610 into the specified number for each line (e.g., the row line) of the grid. In the example illustrated in FIG. 6, the layout may be a 3×3 grid, and the number specified to the row line may be 3. Accordingly, the electronic device may divide the widget objects included in the arrangement sequence 610 into groups of three based on a focus widget object (e.g., the first widget object 611). For reference, the example in which the electronic device provides vertical scroll in the multi-widget view is described, and when the multi-widget view provides horizontal scroll, the widget objects included in the arrangement sequence 610 may be divided based on column lines.

According to various embodiments, among the widget objects determined to be exposed, the electronic device may dispose the widget object preceding the focus widget object on a first side (e.g., the upper left side) of the focus widget object. The electronic device may dispose the widget object succeeding the focus widget object on a second side (e.g., the lower right side) that is opposite to the first side based on the focus widget object. In FIG. 6, an example in which all remaining widget objects succeed the focused first widget object 611 is illustrated. For reference, a widget index of the focused first widget object 611 may be, for example, 1. The electronic device may dispose the first widget object 611 to the third widget object 613 on a first line. The electronic device may dispose the fourth widget object 614 to the sixth widget object 616 on a second line. The electronic device may dispose the fourth widget object 614 to the sixth widget object 616 on the lower right side based on the focus widget object. The electronic device may dispose the seventh widget object 617 to the ninth widget object 619 on the lower right side of the first widget object 611.

The electronic device may determine trajectories from positions at which the widget objects are disposed to arrangement positions mapped in the layout, respectively. For example, in FIG. 6, the electronic device may determine a first trajectory 641 from the position at which the first widget object 611 is disposed to a first arrangement position 651 of the layout. The electronic device may determine a second trajectory 642 from the position at which the second widget object 612 is disposed to a second arrangement position 652 of the layout. The electronic device may determine trajectories of the widget objects determined to be exposed, respectively.

The electronic device may move the widget objects along the determined trajectories based on the distance change between pointing positions. For example, the electronic device may move a widget object (e.g., the focus widget object) corresponding to an arrangement position that is different from the central position of the screen, to the corresponding arrangement position based on the distance change between pointing positions. As illustrated in FIG. 6, the first widget object 611 may move toward the first arrangement position 651. The electronic device may move the second widget object 612 to the ninth widget object 619 to the arrangement positions along the trajectories, respectively. The first widget object 611 may be moved toward its arrangement position while already being exposed in the screen area, and the other widget objects may be moved toward respective arrangement positions from the outside of the screen area along the trajectories. Accordingly, the electronic device may visualize the movement of the focused widget object (e.g., the first widget object 611) first in the screen area, and then may visualize the movement of the other widget objects (e.g., the second widget object 612 to the ninth widget object 619). Accordingly, the other widget objects may be visualized as if the other widget objects follow the focus widget object. Based at least partially on the first arrangement position (e.g., the arrangement position assigned to the first widget object 611) not being a central portion of the group screen, the electronic device may perform an operation of displaying the movement of the first execution screen (e.g., the first widget object 611) to the first arrangement position.

The electronic device may gradually reduce the size of the widget objects to the widget size corresponding to the shape of the layout while moving the widget objects. However, the animation applied to each widget object while moving the widget object is not limited to size reduction, and various animations including at least one of appearing, fade-in, size increase, or rotation may be applied to the widget object.

When the movements of the widget objects along the trajectories are terminated, the electronic device may output the widget objects including the focus widget object to the screen area 660 in the multi-widget view.

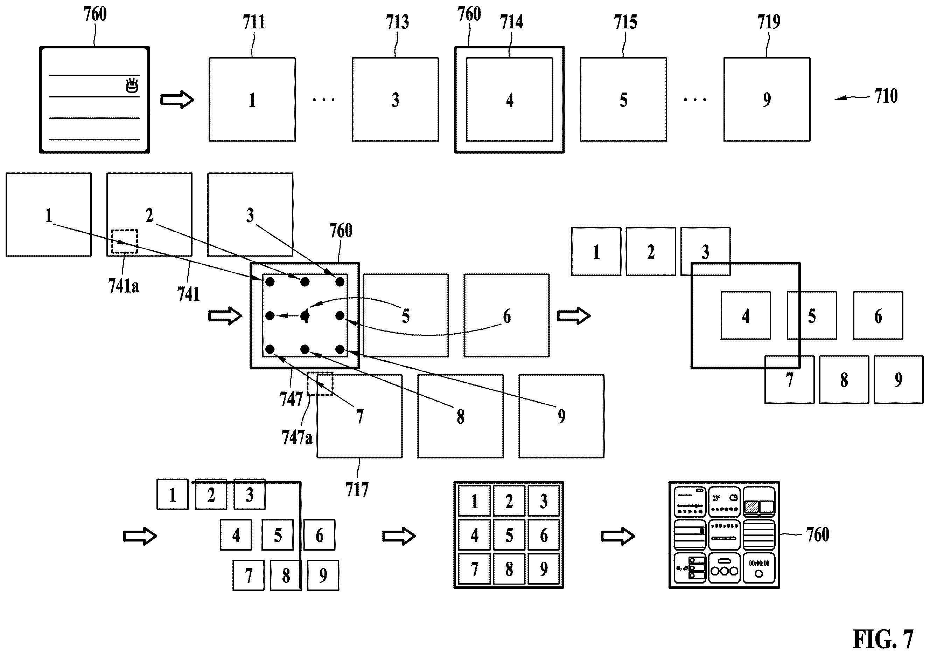

FIG. 7 illustrates an example in which an arrangement position of a widget object according to various embodiments is on one side (e.g., the left side) of a center line.

For example, an electronic device (e.g., the electronic device 201 of FIGS. 2A and 2B) may display a focused fourth widget object 714 in a single widget view on a screen area 760. Based on a pinch gesture reaching a threshold, the electronic device may initiate transition from the single widget view to a multi-widget view.

The electronic device may arrange widget objects 711, 713, 714, 715, and 719 of an arrangement sequence 710 based on the focused fourth widget object 714. For example, a widget index of the fourth widget object 714 may be 4. The electronic device may divide widget objects included in the arrangement sequence 710 into groups of a specified number (e.g., three) for each line. The electronic device may dispose the first widget object 711 to the third widget object 713 on a first line, the fourth widget object 714 to the sixth widget object 716 to a second line, and the seventh widget object 717 to the ninth widget object 719 on a third line. As described above with reference to FIG. 6, since the first widget object 711 to the third widget object 713 precede the focused fourth widget object 714, the electronic device may dispose the first widget object 711 to the third widget object 713 on a first side (e.g., the upper left side) based on the fourth widget object 714 in the screen area 760. The electronic device may dispose the seventh widget object 717 to the ninth widget object 719 on a second side (e.g., the lower right side). The electronic device may also dispose the fifth widget object 715 and the sixth widget object 716 on the second side (e.g., the right side).

The electronic device may determine a path from the position at which each widget object is disposed to an arrangement position mapped in the layout. For example, among the widget objects, the electronic device may also include a path in a direction that is opposite to a direction of at least a portion of a trajectory with respect to a second other widget object succeeding a widget object, in at least a portion of a trajectory with respect to a first other widget object preceding the widget object. Referring to FIG. 7, a partial trajectory 741a of a first trajectory 741 of the first widget object 711 and a partial trajectory 747a of a seventh trajectory 747 of the seventh widget object 717 may be in opposite directions. As described above, the widget object preceding the focused widget object and the widget object succeeding the focused widget object may be disposed on opposite sides based on the screen area 760, and thereafter, trajectories toward respective arrangement positions may be generated.

For reference, the focused fourth widget object 714 may be disposed on the center line, but since the focused fourth widget object 714 is not in the central position, the electronic device may move the fourth widget object 714 toward the corresponding arrangement position in the layout. As described above, the remaining widget objects may be moved to follow the fourth widget object 714.

After all widget objects are moved, the electronic device may display the widget objects in the multi-widget view on the screen area 760.

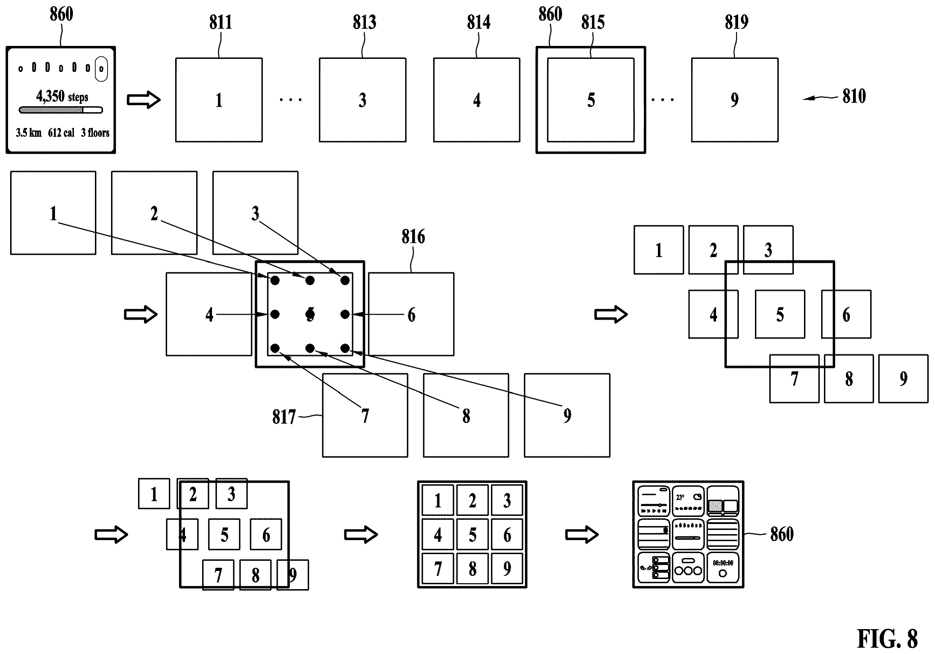

FIG. 8 illustrates an example in which an arrangement position of a widget object is in a central position according to various embodiments the central position.

For example, an electronic device (e.g., the electronic device 201 of FIGS. 2A and 2B) may display a focused fifth widget object 815 in a single widget view on a screen area 860. Based at least partially on a reduced size (e.g., the second size) of a first execution screen (e.g., the fifth widget object 815) being a specified size, the electronic device may display movement of the first execution screen to a first arrangement position. For example, based on a pinch gesture reaching a threshold, the electronic device may initiate transition from the single widget view to a multi-widget view.

Similar to the descriptions provided above with reference to FIGS. 6 and 7, the electronic device may arrange first widget object to ninth widget object 811, 813, 814, 815, and 819 of an arrangement sequence 810 based on a screen area 860 and a focused widget object (e.g., the fifth widget object 815) and may dispose the widget objects by dividing the widget objects into groups of a specified number of each line. A widget index of the fifth widget object 815 may be, for example, 5.

Hereinafter, an example in which the first execution screen is the fifth widget object 815 and a second execution screen is the fourth widget object 814 or the third widget object 813 is described. A second arrangement order corresponding to a second application of the second execution screen may precede a first arrangement order corresponding to a first application of the first execution screen. A group of applications may further include a third application assigned to a third arrangement order succeeding the first arrangement order. For example, the third execution screen may be the sixth widget object 816 or the seventh widget object 817.

As a part of an operation of displaying a group screen (e.g., the multi-widget view), the electronic device may show the second execution screen from the first side with respect to the first execution screen before the second execution screen moves to the second arrangement position. The first side may be, for example, the left, right, upper, lower, or each corner side on the display. The electronic device may show the third execution screen corresponding to the third application in a smaller size than the first size from the second side, that is substantially opposite to the first side with respect to the first execution screen, and then may move the third execution screen to the third arrangement position corresponding to the third arrangement order in the group screen. The second side may be a side that is substantially opposite to the first side among the left, right, upper, lower, or each corner side on the display.

The electronic device may designate the left side with respect to the first execution screen as the first side and the right side with respect to the first execution screen as the second side on the group screen. For example, when the first execution screen is the fourth widget object 814, the first side may be the left side, and when the second execution screen is the sixth widget object 816, the second side may be the right side.

The electronic device may designate the upper side with respect to the first execution screen as the first side and the lower side with respect to the first execution screen as the second side on the group screen. For example, when the first execution screen is the third widget object 813, the first side may be the upper side, and when the second execution screen is the seventh widget object 817, the second side may be the lower side.

When the first arrangement position is a central portion of the group screen, the electronic device may refrain from an operation of displaying the movement of the first execution screen (e.g., the fifth widget object 815) toward the first arrangement position. For example, the electronic device may keep the display position of the first execution screen. When the arrangement position corresponding to the widget object (e.g., the focused fifth widget object 815) is the central position of the screen, the electronic device may continue to reduce the size of the widget object while fixing the position of the widget object. The remaining widget objects 811, 813, 814, 815, and 819 may be moved toward the respective arrangement positions along their trajectories. Since the position of the focused fifth widget object 815 is fixed, the remaining widget objects 811, 813, 814, and 819 may be moved to enclose the focused the fifth widget object 815.

According to an embodiment, the electronic device may determine a path in which the second execution screen (e.g., the widget object corresponding to the second application) moves to the second arrangement position to be a path that does not overlap with the first execution screen that is reduced to the second size. The electronic device may determine movements of the second execution screen toward the second arrangement position so that the second reduced execution screen (e.g., the reduced second execution screen) bypasses the first reduced execution screen (e.g., the reduced first execution screen). The electronic device may determine the movements of the reduced execution screens so that each of the reduced execution screens move toward each of the arrangement positions without intersecting with other reduced execution screens.

After all widget objects are moved, the electronic device may display the widget objects in the multi-widget view on the screen area 860. For example, as a part of an operation of displaying the group screen, the electronic device may display the execution screens for applications corresponding to the group including the first, second, and third execution screens in the form of a grid.

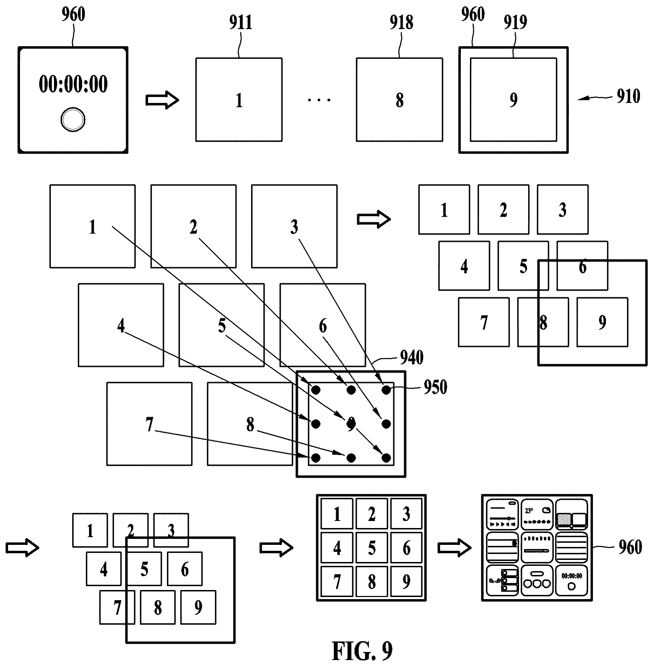

FIG. 9 illustrates an example in which a position index of a widget object is a last index in an arrangement sequence according to various embodiments.

For example, an electronic device (e.g., the electronic device 201 of FIGS. 2A and 2B) may display a focused ninth widget object 919 in a single widget view on a screen area 960. Based on a pinch gesture reaching a threshold, the electronic device may initiate transition from the single widget view to a multi-widget view.

Similar to the descriptions provided above with reference to FIGS. 6 to 8, the electronic device may arrange a first widget object to a ninth widget object 911, 918, and 919 of an arrangement sequence 910 based on a screen area 960 and a focused widget object (e.g., the ninth widget object 919) and may dispose the widget objects by dividing the widget objects into groups of a specified number of each line. For reference, in FIG. 9, the total number of widgets included in the arrangement sequence 910 may be 9, and a widget index of the ninth widget object 919 may be, for example, 9, and may be the last index.

The electronic device may move each widget object along a trajectory 940 toward each arrangement position 950. Similar to FIG. 6, the ninth widget object 919 may be moved toward its arrangement position while already being exposed in the screen area, and the other widget objects 911 and 918 may be moved along respective trajectories toward respective arrangement positions from the outside of the screen area. Accordingly, the electronic device may visualize the movement of the focused widget object (e.g., the ninth widget object 919) on the screen area first, and the movements of the other widget objects 911 and 918 as the other widget objects 911 and 918 follow.

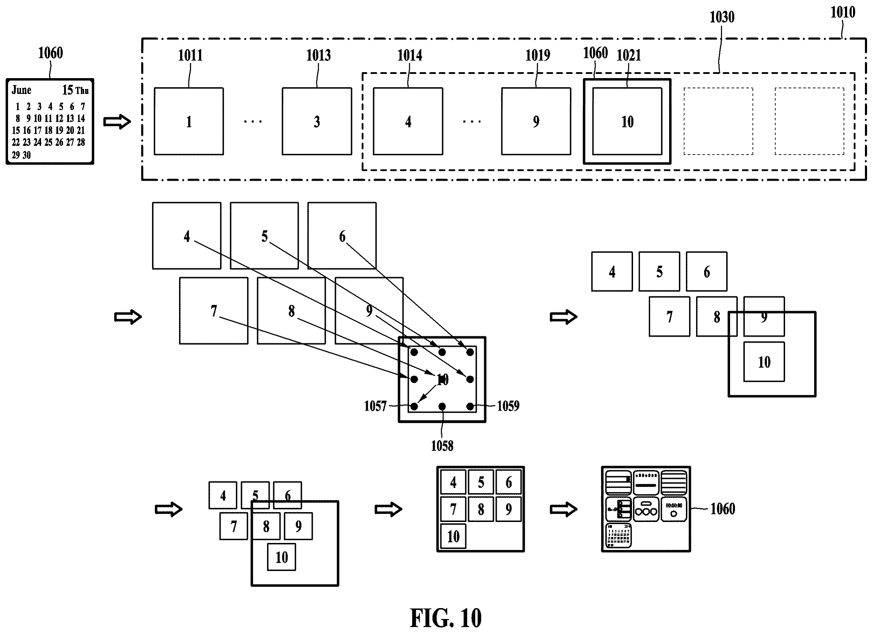

FIG. 10 illustrates an example in which the number of widget objects exceeds the number that may be represented by a layout according to various embodiments.

For example, the number of widget objects included in an arrangement sequence 1010 may be greater than the number that may be represented by a layout designated in a screen area 1060 of a display. In FIG. 10, the arrangement sequence 1010 may include a first widget object to a tenth widget object 1011, 1013, 1014, 1019, and 1021. Based on the focused tenth widget object 1021 with respect to a layout defined for the screen area 1060, the electronic device may determine a total of seven widget objects (e.g., the fourth widget object to the tenth widget object 1014, 1019, and 1021) to be exposed widget objects 1030. The first widget object to the third widget object 1011 and 1013 may be excluded from exposure. Since the number (e.g., seven) of the exposed widget objects 1030 determined to be exposed is less than the number (e.g., ten) of arrangement positions included in the layout, for at least some of the arrangement positions (e.g., two arrangement positions), widget objects may not be mapped.

Similar to the descriptions provided above with reference to FIGS. 6 to 10, the electronic device may move the widget objects along trajectories toward respective arrangement positions. For example, the electronic device may move the tenth widget object along a trajectory toward a seventh arrangement position 1057 and may move the other widget objects along respective trajectories as if the other widget objects follow. However, as described above, since widget objects are not mapped to the eighth arrangement position 1058 and the ninth arrangement position 1059, the corresponding arrangement positions may be empty in the multi-widget view after the widget objects are moved.

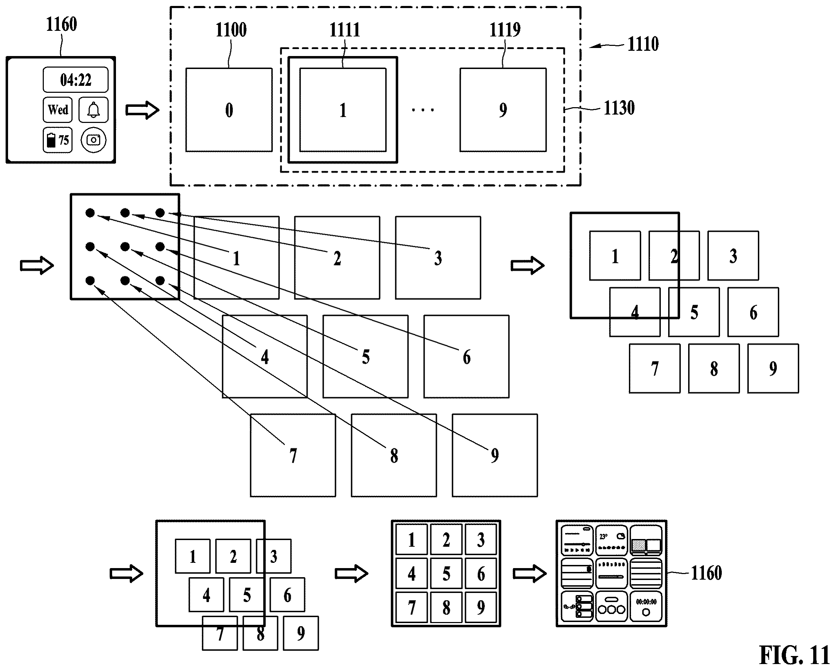

FIG. 11 illustrates an example of entering a multi-widget view from a cover home widget according to various embodiments.

An electronic device (e.g., the electronic device 201 of FIGS. 2A and 2B) may output a cover home widget 1100 in a screen area 1160. The cover home widget 1100 may be a widget set as default among a plurality of widget objects included in the arrangement sequence 1110. For example, the cover home widget 1100 may be a widget that is directly displayed on a display (e.g., the sub-display 262 of FIGS. 2A and 2B) when turning on the power or the display. The cover home widget 1100 may be configured separately, but the example is not limited thereto, and one of general widget applications may be set as the cover home widget 1100. A widget index of the cover home widget 1100 may be, for example, 0.

Based on a pinch gesture reaching a threshold, the electronic device may determine to expose widget objects other than the cover home widget 1100 in the arrangement sequence 1110 while initiating transition from a single widget view to the multi-widget view. For example, in FIG. 11, a first widget object to a ninth widget object 1111 and 1119 may be selected to be exposed widget objects 1130.

Similar to the descriptions provided above, the electronic device may move the widget objects along the trajectory toward respective arrangement positions. However, since there is no focused widget object, the electronic device may visualize that all widget objects are moved together. In addition, the electronic device may blur and display the cover home widget 1100 in background and may overlay and display the other widget objects thereon.

For reference, in FIGS. 6 to 11 described above, the example in which the size of the widget object gradually decreases while moving along the trajectory is described as an example of transition animation. However, the example is not limited thereto. For example, animation applied to the widget objects moving along the trajectory may include at least one of appearing, appearing while rotating, or appearing while shrinking. In addition, an animation effect moving along a trajectory is illustrated. However, in another example, the electronic device may apply at least one of appearing, appearing while rotating, or appearing while shrinking to each widget object at the corresponding arrangement position of the layout.

FIG. 12 is a diagram illustrating an example operation in a multi-widget view according to various embodiments.

An electronic device (e.g., the electronic device 201 of FIGS. 2A and 2B) may display a first widget object 1211 in a single widget view. Based on detecting a pinch gesture, the electronic device may enter a multi-widget view 1220.

When the electronic device detects an unpinch gesture 1290 in the multi-widget view, the electronic device may measure an unpinch amount. For example, in operation 1250, the electronic device may compare the unpinch amount with a threshold. The unpinch amount may be an amount determined based on at least one of a distance change between two or more pointing positions away from each other or a moving speed thereof. The distance change between the two or more pointing positions away from each other may be referred to as an unpinch distance, and the moving speed or a distance change rate of the two or more pointing positions away from each other may be referred to as an unpinch speed.

For example, based on detecting two or more pointing positions away from each other on a screen on which a plurality of widget objects is output, the electronic device may return to a screen corresponding to a previous widget object. Based on the unpinch amount exceeding the threshold (e.g., the unpinch distance exceeds 30 DP), the electronic device may output a screen corresponding to a first widget object, which is the previous widget object, from the multi-widget view.

In another example, based on the unpinch amount less than or equal to the threshold, the electronic device may continue to display the multi-widget view. Based on a gesture being released before the unpinch distance reaches a threshold distance change, the electronic device may display the multi-widget view.

The electronic device may also detect an input (e.g., a tap gesture 1280 as a pointing input) to select one of the plurality of widget objects in the multi-widget view. The electronic device may perform transition to a screen focused on the selected widget object by the tap gesture 1280. For example, the electronic device may perform transition to the single widget view for a second widget object 1212 with visual feedback that gradually increases the size of the second widget object 1212 that is selected.

FIG. 13 is a diagram illustrating display update of a widget object according to various embodiments.

An electronic device (e.g., the electronic device 201 of FIGS. 2A and 2B) may continue to update graphic representations of widget objects displayed on a screen area 1360 in a multi-widget view. For example, when widget objects 1310 and 1311 are widgets in which graphic representations are changed in real time, such as a stopwatch or a timer, the electronic device may continuously update the graphic representations of a stopwatch widget and a timer widget even in the multi-widget view. When an event and/or information is updated in a plurality of widget objects in the multi-widget view, the electronic device may perform screen updates of the plurality of widget objects in parallel.

The electronic device may move the plurality of widget objects by an additional input (e.g., a scroll input). The scroll input may be an input to move a pointing position while pointing an arbitrary position in the screen area 1360. The electronic device may move the plurality of widget objects in the multi-widget view according to the scroll input. When the widget objects 1310 and 1311 that are operating in real time are moved and deviated from the screen area 1360, the electronic device may stop screen updates of the widget objects 1310 and 1311. However, regardless of suspension of screen updates, the electronic device may continue the operations of widget applications corresponding to the widget objects 1310 and 1311. When the widget objects 1310 and 1311 that were deviated the screen area 1360 return to the screen area 1360, the electronic device may resume screen updates of the widget objects 1310 and 1311.

**In** FIG. 13, an example in which the widget object 1310 is the fifth widget object in the arrangement sequence and is a timer application, the widget object 1311 is the sixth widget object in the arrangement sequence and is a stopwatch application, and a widget object 1320 is the tenth widget object in the arrangement sequence and is a health application (e.g., an application displaying 4350 step counts), is illustrated. The electronic device may update data of the timer application, the stopwatch application, and the health application in the background. Based on the widget objects 1310 and 1311 deviated from the screen area 1360 and positioned in a hidden area by scrolling the screen area 1360, the electronic device may stop displaying the timer application and the stopwatch application. The electronic device may continue to play (e.g., hidden play) the timer application and the stopwatch application even while displaying the application is stopped. In hidden play, screen update may be stopped, but the data may be updated (e.g., reflecting sensing data). In the example illustrated in FIG. 13, since the widget object 1320 corresponding to the health application is in the screen area 1360, the electronic device may perform screen update for the data of the health application in response to receiving sensing data.

Accordingly, the electronic device may perform optimization for securing the performance while efficiently managing resources.

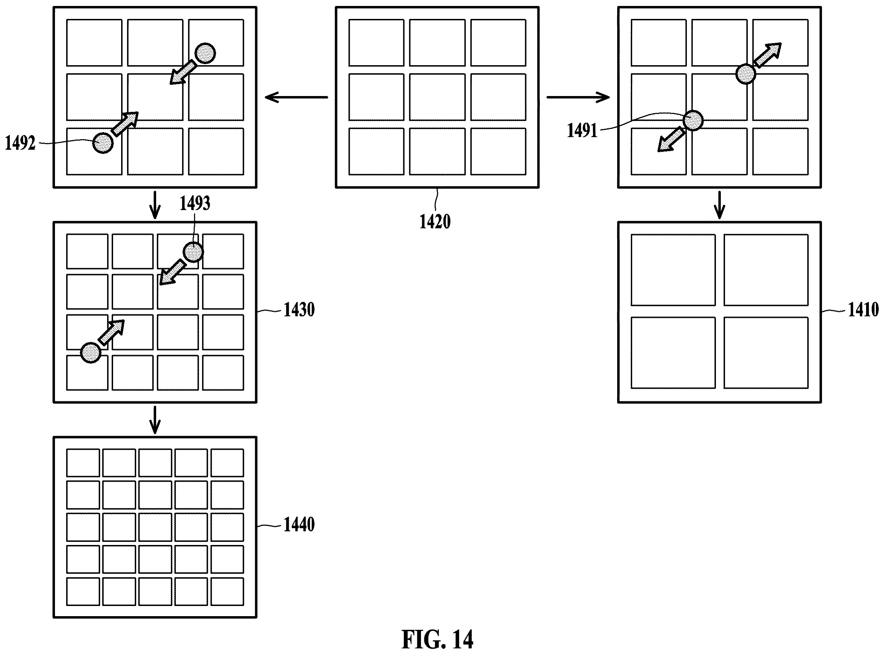

FIG. 14 is a diagram illustrating changing a layout according to various embodiments.

An electronic device (e.g., the electronic device 201 of FIGS. 2A and 2B) may change a layout in a multi-widget view based on an input (e.g., a gesture input). For example, in FIG. 14, an example in which the layout is in the form of a grid is described. An arrangement of the grid having m row lines and n column lines may be represented as m×n, for example, and in this case, m and n may be integers greater than or equal to 1. In the present disclosure, an example in which m and n have the same value is illustrated. However, the example is not limited thereto, and m and n may have different values. The layout arrangement (e.g., the arrangement in the form of a grid) may vary depending on the design, and in FIG. 14, 2×2 arrangement, 3×3 arrangement, 4×4 arrangement, and 5×5 arrangement are illustrated as examples. For example, the electronic device may dispose and display widget object in a grid 1420 of 3×3 arrangement as a default layout.

The electronic device may also determine the arrangement of the default layout based on the number of preset widget objects. The electronic device may set the layout arrangement having the smallest remainder by dividing the number of widget objects added to the cover home screen by the specified number of a line (e.g., the number of columns in a row line) as the default layout among a plurality of layout arrangements. In the case of m×n arrangement, the electronic device may determine the arrangement of the default layout based on the remainder obtained by dividing the number of pre-added widget objects by n. For example, when the number of widget objects added to the cover home screen is 2, a grid 1410 of 2×2 arrangement may be set as the default layout. In another example, when the number of widget objects added to the cover home screen is 20, a grid 1430 of 4×4 arrangement (or a grid 1440 of 5×5 arrangement) may be set as the default layout.

According to various embodiments, the electronic device may change the arrangement type (e.g., the number of arrays) of the grid based on a gesture input (e.g., a pinch gesture or an unpinch gesture). For example, the electronic device may detect a pinch input to a first execution screen (e.g., a focused widget object) displayed in a first size (e.g., the default size) as at least a part of a touch input. Based at least partially on the distance change or speed change between two pointing positions corresponding to the pinch input, the electronic device may increase or decrease the number of execution screens (e.g., widget objects) displayed on a group screen (e.g., the multi-widget view).

For example, based on detecting the pinch gesture in an arbitrary layout (e.g., the default layout), the electronic device may increase the number of arrays of the layout. The number of arrays may correspond to a product (e.g., m×n) of the number of lines (e.g., m) that may be displayed on the screen area and the number of slots (e.g., n) of each line. In FIG. 14, based on detecting a pinch gesture 1492 in the grid 1420 of 3×3 arrangement, the electronic device may change to the grid 1430 of 4×4 arrangement. Based on additionally detecting a pinch gesture 1493 in the grid 1430 of 4×4 arrangement, the electronic device may change to the grid 1440 of 5×5 arrangement. The electronic device may increase the number of widget objects displayed on the screen area based on the pinch gesture.

In another example, based on detecting an unpinch gesture in an arbitrary layout, the electronic device may decrease the number of arrays of the layout. In FIG. 14, based on detecting an unpinch gesture 1491 in the grid 1420 of 3×3 arrangement, the electronic device may change to the grid 1410 of 2×2 arrangement. The electronic device may increase the size of the widget objects displayed on the screen area based on the unpinch gesture.

The pinch gestures 1492 and 1493 and the unpinch gesture 1491 described above may be continuous. The electronic device may increase or decrease the number of arrays of the layout by decreasing or increasing the size of the widget objects in the multi-widget view based on the pinch amount or the unpinch amount.

The electronic device may also consider the speed in addition to the relative moving distance of pointing positions in the pinch amount or the unpinch amount. The relative moving distance may indicate a distance the pointing position is moved based on the size of the display. The electronic device may calculate the pinch amount or the unpinch amount further based on a weight with respect to the speed according to the size (e.g., the size of the screen area) of the display (e.g., the sub-display). The electronic device may apply a first weight to the moving speed of a gesture input detected on the display in the first size and may apply a second weight that is greater than the first weight to the moving speed of a gesture input detected on the display in the second size that is greater than the first size. The electronic device may calculate the pinch amount (or the unpinch amount) for the gesture input detected on the display in the second size to be greater than the gesture input detected on the display in the first size even if the relative moving distances are the same. Accordingly, even if a relative moving distance is insufficient in a relatively large display, the electronic device may change the layout arrangement when detecting quick movement of the pointing position.

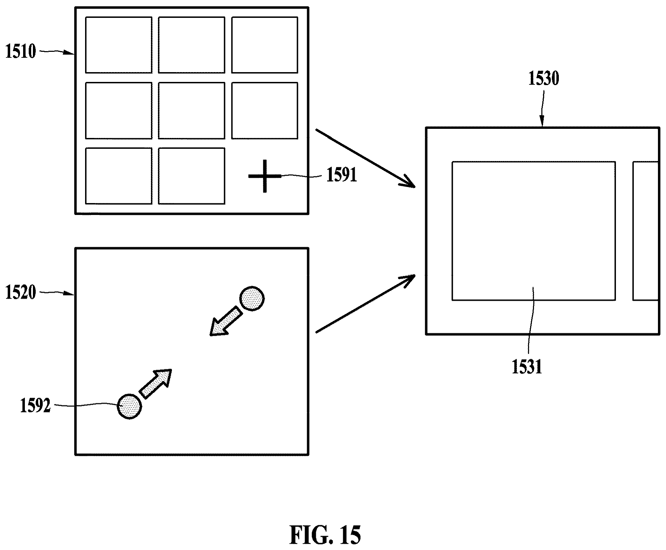

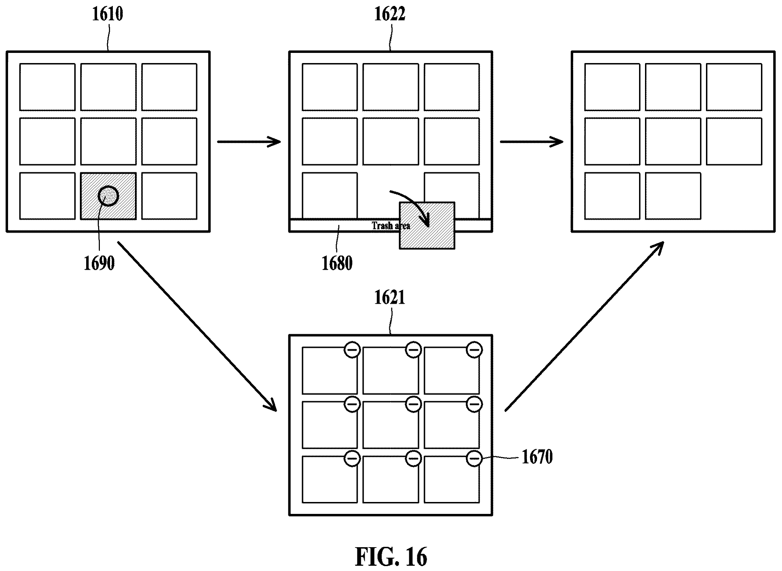

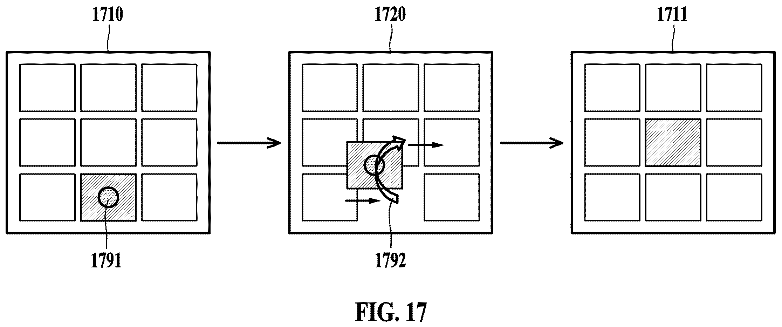

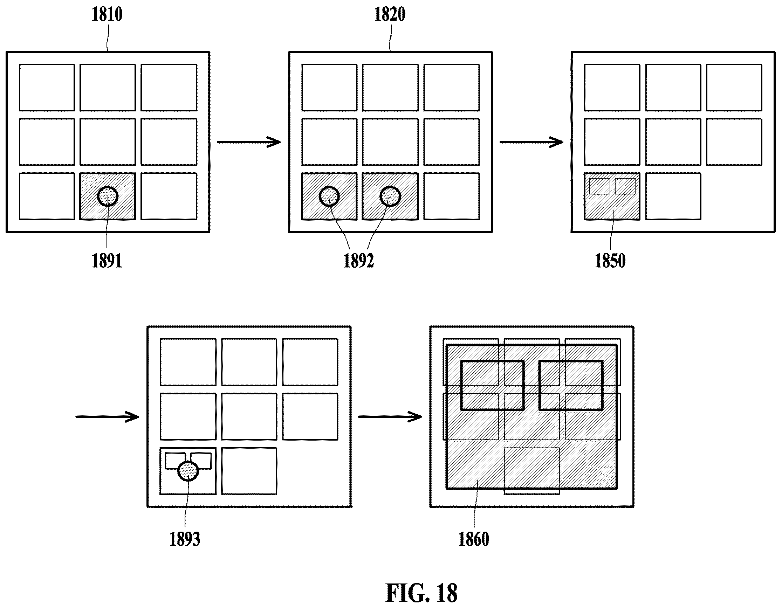

The electronic device may change, delete, or add a widget object from or to the arrangement sequence based on an additional input. The addition of widget object is described in greater detail below with reference to FIG. 15, the deletion of widget object is described in greater detail below with reference to FIG. 16, the movement of widget object is described in greater detail below with reference to FIG. 17, and grouping widget objects is described in greater detail below with reference to FIG. 18.

FIG. 15 is a diagram illustrating adding a widget object according to various embodiments.

An electronic device (e.g., the electronic device 201 of FIGS. 2A and 2B) may add a widget object to a home screen application in various interfaces. For example, the electronic device may enter an interface (e.g., a widget add page) to add a widget object, from a multi-widget view 1510 or a cover home widget 1520.

For example, the electronic device may enter a widget add interface 1530 from the multi-widget view 1510 based on an input to select a widget add button 1591. The widget add button 1591 may be generated at an arrangement position corresponding to the last widget index in the multi-widget view 1510. When the limit of widget object addition to an arrangement sequence has reached, the electronic device may hide or remove the widget add button 1591.

In another example, when there is no currently registered widget object, the electronic device may enter the widget add interface 1530 from the cover home widget 1520 based on a pinch gesture 1592.

The electronic device may display a widget object that may be added, on the widget add interface 1530. The electronic device may add a selected widget object 1531 to a home screen application.

FIG. 16 is a diagram illustrating deleting a widget according to various embodiments.

An electronic device (e.g., the electronic device 201 of FIGS. 2A and 2B) may delete a widget object from a home screen application in various interfaces.

For example, the electronic device may enter a widget delete interface 1621 based on a long-press input 1690 to a widget object or an empty part in a multi-widget view 1610. The long-press input 1690 may refer to an input in which a pointing position is formed and then remains at a same position for a threshold time period or more. The electronic device may generate a delete button 1670 for each widget object in the widget delete interface 1621. When the delete button 1670 is selected, the electronic device may delete a corresponding widget object. The electronic device may remove a selected object from the home screen application.

In another example, the electronic device may, for example, enter a widget delete interface 1622 based on the long-press input 1690 to a widget object or the empty part in the multi-widget view 1610. The electronic device may set a trash area 1680 in the widget delete interface 1622. The electronic device may move the widget object based on a drag gesture. The drag gesture may refer to a gesture in which a pointing position is formed and then is moved. The electronic device may drop the widget object that is moved by the drag gesture at a position in which the pointing position is released. Based on the drag gesture being released while the widget object is positioned in the trash area 1680, the electronic device may delete the widget object. The electronic device may remove a selected object from the home screen application.

The electronic device may provide a function to remove a widget object through a simple gesture in the multi-widget view 1610.

FIG. 17 is a diagram illustrating changing an arrangement position of a widget object according to various embodiments.

An electronic device (e.g., the electronic device 201 of FIGS. 2A and 2B) may change an arrangement position of a widget object in a multi-widget view. Similar to the descriptions provided above, the electronic device may enter a widget move interface 1720 based on a long-press input 1791 to a widget object or an empty part in a multi-widget view 1710. The arrangement positions of widget objects in the widget move interface 1720 may be changed (e.g., movable). The electronic device may change the order of the corresponding widget object in an arrangement sequence as the arrangement position of the widget object is changed. In other words, the electronic device may change a widget index of the widget object.

The electronic device may move the widget object according to a drag gesture 1792 in the widget move interface 1720. The electronic device may rearrange the widget object moved according to the drag gesture 1792 at a position in which the pointing position is released. For example, the electronic device may arrange the widget object the moved widget object at a position in which the pointing position is released and may change the position index of the widget object to an index corresponding to the arrangement position. The electronic device may move a previous widget object in the corresponding arrangement position to a position succeeding the moved widget object.

After completing the movement of the widget object and updating the widget index, the electronic device may display a new multi-widget view 1711.

FIG. 18 is a diagram illustrating grouping widget objects according to various embodiments.

An electronic device (e.g., the electronic device 201 of FIGS. 2A and 2B) may group widget objects in a multi-widget view. Similar to the descriptions provided above, the electronic device may enter a widget grouping interface 1820 based on a long-press input 1891 to a widget object or an empty part in a multi-widget view 1810.

The electronic device may select a plurality of widget objects based on a multi-pointing input 1892 in the widget grouping interface 1820. The multi-pointing input 1892 may be an input in which a plurality of pointing positions is simultaneously formed in a screen area. The electronic device may group the selected widget objects to a same folder object 1850. Based on an input 1893 to select the folder object 1850, the electronic device may enlarge and display the selected folder object 1850. The electronic device may blur a background 1860 of the folder object 1850 for visibility and may overlay and output the grouped widget objects on the background 1860. The electronic device may return to a previous state (e.g., the multi-widget view 1810) based on pointing an empty area, a back gesture, or a back button input. The back gesture may refer to a swipe gesture from an edge of the screen area. The swipe may refer to a gesture in which a pointing position is formed, is moved in one direction, and then is released.

For reference, in FIGS. 15, 16, 17, and 18, examples of adding and deleting a widget are described, but the electronic device may provide an interface that simultaneously supports adding, deleting, and moving a widget. For example, based on detecting an unpinch gesture in a multi-widget view (e.g., a multi-widget view in a layout with the maximum number of arrays) the electronic device may enter a widget reset interface. The electronic device may also enter the widget reset interface based on long-press to an empty part. In the widget reset interface, the electronic device may generate a widget add button at the last arrangement position of the layout and may generate a widget delete button on each widget object.

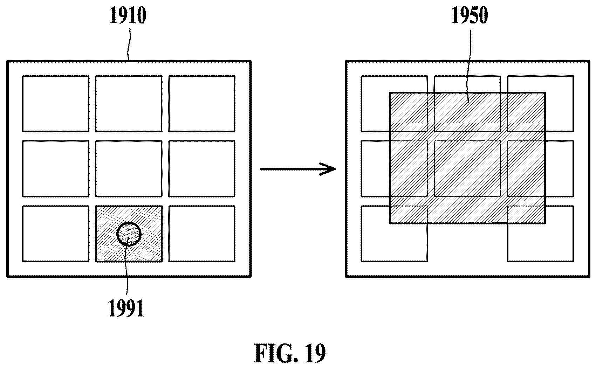

FIG. 19 is a diagram illustrating viewing widget details according to various embodiments.

An electronic device (e.g., the electronic device 201 of FIGS. 2A and 2B) may display detailed information of a selected widget object based on an additional gesture (e.g., a long-press input 1991) in a multi-widget view 1910. For example, the electronic device may output detailed information 1950 (e.g., additional information) about a widget object selected by the long-press input 1991 in the multi-widget view 1910. Accordingly, the electronic device may provide a preview of the widget object in the multi-widget view 1910 through the additional gesture.

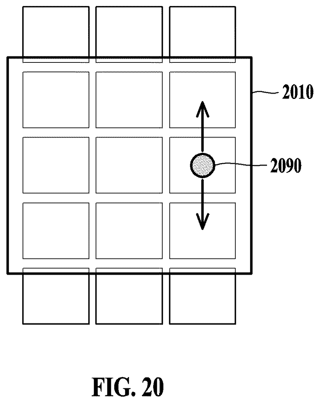

FIG. 20 is a diagram illustrating vertical scroll of widget objects according to various embodiments.

An electronic device (e.g., the electronic device 201 of FIGS. 2A and 2B) may move a plurality of widget objects based on an additional gesture (e.g., a scroll input 2090) in a multi-widget view 2010. The plurality of widget objects may be moved together while maintaining a layout. For example, when the number of widget objects exceeds the maximum number of displayable widgets in a sub-display in the specified layout, the electronic device may not output the other widget objects. The electronic device may output a widget object entering the screen area by the scroll input and may not output a widget object deviated from the screen area.

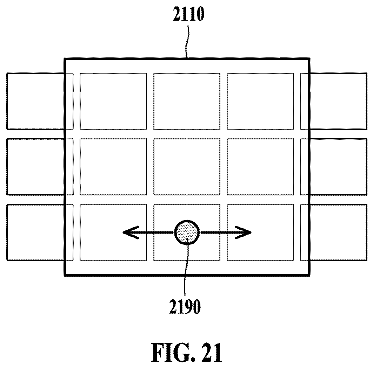

FIG. 21 is a diagram illustrating horizontal scroll of widget objects according to various embodiments.

An electronic device (e.g., the electronic device 201 of FIGS. 2A and 2B) may move a plurality of widget objects based on an additional gesture (e.g., a scroll input 2190) in a multi-widget view 2110. In FIG. 20, vertical scroll is described, but in FIG. 21, horizontal scroll is illustrated. The electronic device may support horizontal scrolling or vertical scrolling as a scrolling scheme to expose a widget object deviated from a screen area in the multi-widget view. In FIG. 21, based on the horizontal scroll input 2190, the electronic device may move widget objects to the left or right while maintaining the layout. The electronic device may stop outputting a widget object deviated from the screen area by the movement and may output a widget object entering the screen area.

The electronic device may support horizontal scrolling or vertical scrolling optimized to the situation. When there are widget objects exceeding the number of widget objects that may be displayed on the screen area, the electronic device may provide a scroll function. A scrolling direction may be determined based on at least one of selection of a user, a ratio of the display, or orientation of the electronic device. For example, horizontal and vertical scrolling may be set by the selection of the user.

For example, according to the width-to-height of the screen area, when the width is greater than the height, the electronic device may provide horizontal scrolling, and when the height is greater than the width, the electronic device may provide vertical scrolling. However, the example is not limited thereto, and the scrolling direction may be opposite depending on the situation.

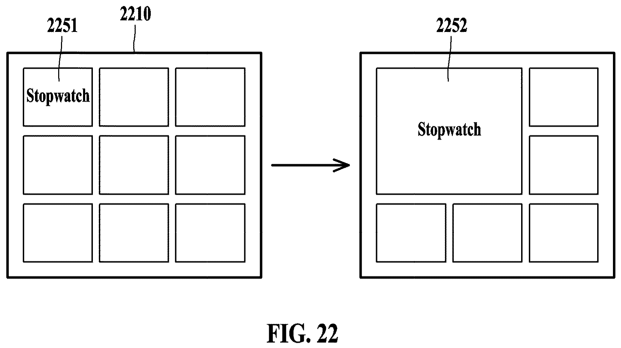

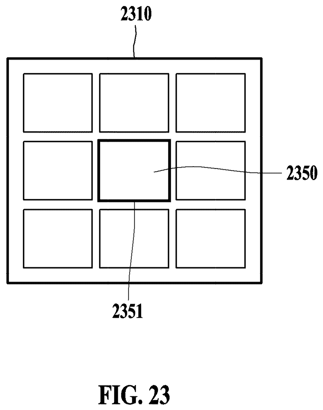

FIGS. 22 and 23 are diagrams illustrating visualization of widget objects in a multi-widget view according to various embodiments.

An electronic device (e.g., the electronic device 201 of FIGS. 2A and 2B) may change visualization of a widget object in multi-widget views 2210 and 2310. For example, in the multi-widget views 2210 and 2310, basically, all widget objects may have the same size. In the examples illustrated in FIGS. 22 and 23, each widget object may occupy a 1×1 slot (or space) in a layout.

For example, the electronic device may change the number of slots (or spaces) occupied in the layout by a widget object in which an event has occurred. The electronic device may increase the number of slots occupied by an object of an arbitrary widget based on a widget priority. The electronic device may determine whether an event of a widget object has occurred based on at least one of the occurrence of an update on a screen within a specified threshold time (e.g., N seconds) from a current time point, currently in operation, or the occurrence of a new notification. The electronic device may increase the priority of the widget object in which an event has occurred.

The electronic device may increase the number of slots occupied by the widget object in which the event has occurred. For example, when a stopwatch widget object 2251 is in operation, the electronic device may increase the number of slots occupied by the stopwatch widget object 2251. The electronic device may update the stopwatch widget object 2251 that occupies a 1×1 slot to a stopwatch widget object 2252 that occupies a 2×2 slot. The electronic device may emphasize a state change of the widget for the user by visualizing the widget in a larger size.

As the number of slots occupied increases, a widget index assigned to the widget object may be updated. For example, in the example illustrated in FIG. 22, the stopwatch widget object 2252 may have widget indices of 1, 2, 4, and 5, and the other widget objects may have widget indices of 3, 6, 7, 8, and 9. Accordingly, the transition animation described above with reference to FIGS. 6 to 11 may proceed along the trajectory corresponding to the arrangement position determined according to the updated widget index.

According to various embodiments, the electronic device may apply a highlight to a widget object 2350 in which an event has occurred in the multi-widget view 2310. For example, when an alert or notification that requires confirmation by the user has occurred in the widget application, the electronic device may highlight an edge 2351 of the widget object 2350. The electronic device may apply a visual effect (e.g., a blinking effect) to the edge 2351 of the widget object 2350. Accordingly, the electronic device may draw the attention of the user to the widget object 2350 in the multi-widget view 2310.

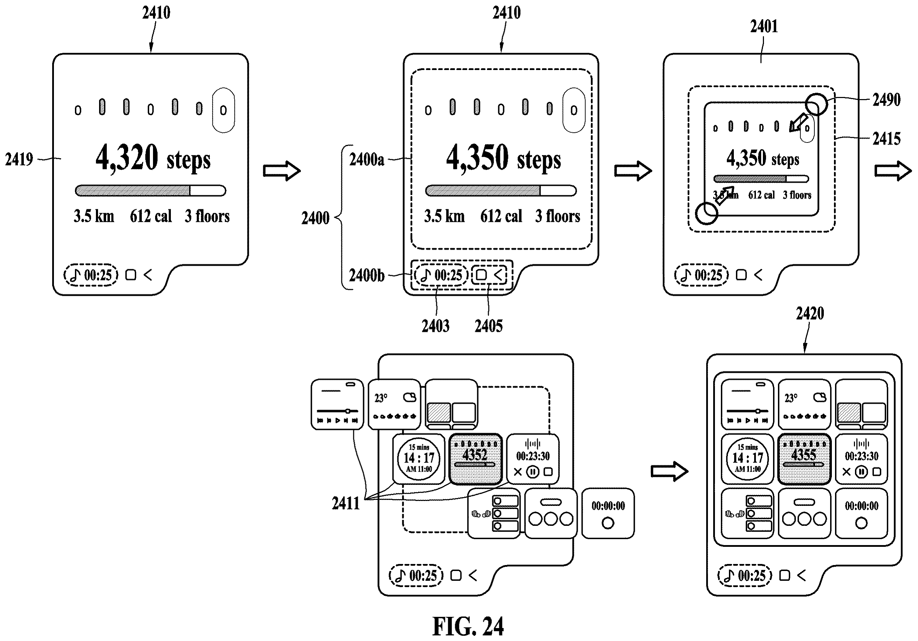

FIG. 24 is a diagram illustrating a transition from a single widget view to a multi-widget view according to various embodiments.

An electronic device (e.g., the electronic device 201 of FIG. 2) may display a widget object in a single widget view 2410 on a screen area 2400 (e.g., the screen area of the sub-display 262 of FIGS. 2A and 2B). In the example illustrated in FIG. 24, the widget object may be the fifth widget object (e.g., the health application) in an arrangement sequence. The screen area 2400 may include a first area 2400a (e.g., the first area 262a of FIGS. 2A and 2B) and a second area 2400b (e.g., the second area 262b of FIGS. 2A and 2B). The electronic device may display a capsule user interface (UI) 2403 and a navigation area 2405 in the second area 2400b. The capsule UI 2403 may indicate an on-going capsule UI for displaying an execution state that updates an operation of a background application in real time or periodically. In the example illustrated in FIG. 24, the capsule UI 2403 may display a playback state of a music application corresponding to the first widget object in the arrangement sequence. The navigation area 2405 may include a home key and a back key.

While a first execution screen (e.g., a screen 2419 corresponding to the fifth widget object) is displayed at a first arrangement position (e.g., the central portion of the display) of a group screen (e.g., a multi-widget view 2420), the electronic device may display an execution result of the first application as updated via the first execution screen. For example, regardless of the size of the first execution screen, while the first execution screen is displayed at the corresponding arrangement position the electronic device may display an updated execution result of the health application in which a step count is continuously updated from 4320, 4350, 4352 to 4355.

The electronic device may reduce the size of the widget object displayed in the single widget view 2410 based on a pinch gesture 2490. For example, the electronic device may detect a pinch gesture (e.g., pinch zoom-out) on the fifth widget object. When a pinch distance is greater than or equal to a threshold distance, the electronic device may initiate transition to a multi-widget view. Based on the pinch gesture 2490 continued after the widget object is reduced to a specified size 2415, the electronic device may initiate transition to the multi-widget view 2420. The electronic device may output a cover image 2401 in an outer area revealed by the reduction of the widget object. The cover image 2401 may be blurred and displayed.

During the transition from the single widget view 2410 to the multi-widget view 2420, the electronic device may continuously update data for an application operating in the background. For example, in the example illustrated in FIG. 24, first, fourth, fifth, and sixth widget objects 2411 of the arrangement sequence may be widget object corresponding to background play applications. The fourth widget object (e.g., the timer application) may gradually decrease a timer time during the transition and may display the reduced timer time. The fifth widget object (e.g., the health application) may update the data according to sensing data and may display the updated data. The sixth widget object (e.g., a voice recording application) may continue recording during the transition and may update the time.

When the transition operation is completed, the electronic device may display the multi-widget view 2420. The background play applications described above may still continue to operate.

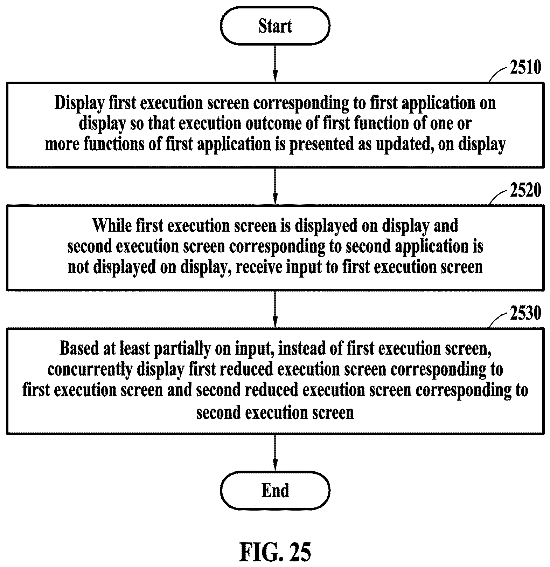

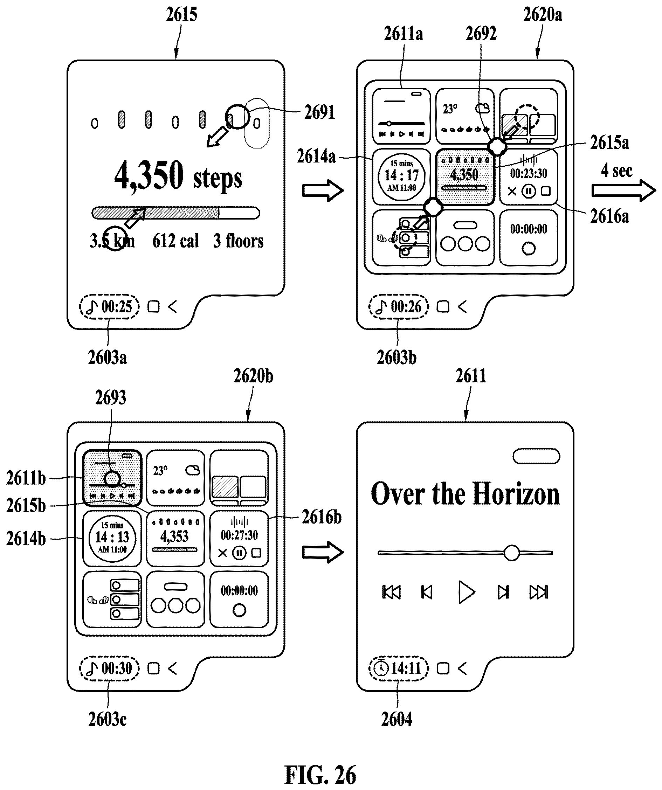

FIGS. 25 and 26 include a flowchart and diagram illustrating example transitions between a single widget view and a multi-widget view according to various embodiments.

For example, a single widget view, a multi-widget view, time lapse in the multi-widget view, and a sequential process of transition to another single widget view are illustrated.

In operation 2510, an electronic device (e.g., the electronic device 201 of FIG. 2) may display a first execution screen corresponding to a first application on a display so that an execution outcome of a first function of one or more functions of the first application is presented as updated. In FIG. 26, an example in which the first application is a widget application and the first execution screen is a widget object (e.g., the fifth widget object) corresponding to the widget application, is illustrated. The electronic device may display a widget view corresponding to the first application on the first execution screen.

For example, the electronic device may display a single widget view 2615 corresponding to the fifth widget object in an arrangement sequence. The first function of the fifth widget object may be, for example, a function to count and display steps of a user. The execution outcome of the first function in the fifth widget object may be a step number determined based on the counting described above. In FIG. 26, the electronic device may display the updated step number of 4350.

Before receiving an input, the electronic device may display a graphical indication indicating a third execution screen (e.g., a screen 2611a) corresponding to a third application (e.g., the music application) that is displayed on the display before the first execution screen, on the first execution screen. The graphical indication may be, for example, a capsule UI 2603a in the single widget view 2615. The capsule UI 2603a may display an on-going capsule UI for displaying a state of an operation of another application (e.g., the background play application) that is executed in background, wherein the state is updated in real time or periodically. As an operation of displaying the graphical indication, the electronic device may perform an operation of displaying, on the display, an execution outcome of a third function of one or more functions of the third application in background as updated. The function of the music application may include, for example, playing music and displaying playback time. In FIG. 26, the capsule UI 2603a may display an elapsed time (e.g., the music playback time) of the music application, for example.

In operation 2520, while the first execution screen is displayed on the display and a second execution screen corresponding to a second application is not displayed on the display, the electronic device may receive an input to the first execution screen. In FIG. 26, an example in which the second application may be another widget application and the second execution screen is a widget object corresponding to the widget application is illustrated. The electronic device may detect an input (e.g., the pinch gesture) to the first execution screen in the single widget view 2615 that displays only the first execution screen. For reference, although not illustrated in FIG. 26, when the electronic device outputs the single widget view for the second application, the electronic device may display the widget view corresponding to the second application as the second execution screen.

The electronic device may perform transition from the single widget view 2615 to a multi-widget view 2620a based on a pinch gesture. For example, based on detecting a pinch gesture (e.g., pinch zoom-out) that is greater than or equal to a threshold distance while the fifth widget object (e.g., the health application) is displayed, the electronic device may initiate transition to the multi-widget view 2620a. Based on a distance between a starting point 2691 (e.g., a position or time point at which a touch is formed) and an end point 2692 (e.g., a position or time point of touch release) of the pinch gesture greater than or equal to the threshold distance, the electronic device may perform transition to the multi-widget view 2620a. The electronic device may display the multi-widget view 2620a through the operations similar to FIG. 24.

In operation 2530, based at least partially on the input, instead of the first execution screen, the electronic device may concurrently display a first reduced execution screen corresponding to the first execution screen and a second reduced execution screen corresponding to the second execution screen on the display. In addition, based at least partially on the input, instead of the first execution screen, the electronic device may display a third reduced execution screen corresponding to the third execution screen concurrently with the first reduced execution screen and the second reduced execution screen. The electronic device may concurrently display a plurality of reduced execution screens in the multi-widget view 2620a. The reduced execution screen may indicate an execution screen in a smaller size than the original size (e.g., the default size) of the execution screen of the application. In the example illustrated in FIG. 26, the first reduced execution screen may be a screen 2615a of the fifth widget object, and the second reduced execution screen may be screens 2611a, 2614a, and 2616a of the other widget objects.

For example, some of the widget objects in the arrangement sequence may correspond to background play applications. In the example illustrated in FIG. 26, a widget object corresponding to the first application of the arrangement sequence, a widget object corresponding to the fourth application, a widget object corresponding to the fifth application, and a widget object corresponding to the sixth application may correspond to background play applications. The electronic device may update the screen from the multi-widget view 2620a to a multi-widget view 2620b as the time elapses. For example, the electronic device may update the screens 2611a, 2614a, 2615a, and 2616a of widget objects of the multi-widget view 2620a to screens 2611b, 2614b, 2615b, and 2616b. The electronic device may display the screens 2611b, 2614b, 2615b, and 2616b based on obtained or sensed data after, for example, 4 seconds has elapsed. Accordingly, the electronic device may display the updated multi-widget view 2620b.

For example, the electronic device may include an operation of providing the first reduced execution screen (e.g., the screen 2615a of the fifth widget object) while the execution outcome of the first function is additionally updated. In FIG. 26, the electronic device may display the step number of 4350 on the screen 2615a in the multi-widget view 2620a. The electronic device may obtain an execution outcome updated in each application while displaying a group screen (e.g., the multi-widget view 2620a). The electronic device may provide the step number of 4353 to the screen 2615b as the additionally updated execution outcome of the application (e.g., the fifth widget object). The electronic device may display the screen 2615 updated with the step number of 4353.

As a part of the operation of concurrently displaying the first reduced execution screen and the second reduced execution screen (e.g., the screen 2614a of the fourth widget object), the electronic device may provide an execution outcome of a second function of one or more functions of the second application as updated. In the example illustrated in FIG. 26, the second application may be a timer application, and the second function may be a timer function of the timer application. For example, the electronic device may update the second reduced execution screen corresponding to the fourth widget object (e.g., the widget of the timer application) other than the fifth widget object. The electronic device may display an updated remaining time in the timer application on the corresponding reduced screen 2614b.

As an operation of displaying the third reduced execution screen, the electronic device may perform an operation of providing the execution outcome of the third function to the third reduced execution screen as additionally updated. For example, when displaying the multi-widget view 2620a, the electronic device may display a progress bar corresponding to the playback time of music on the third reduced screen (e.g., the screen 2611a) of the third application (e.g., the music application). Based on the playback time of the music application increased over time, the electronic device may provide the increased playback time to the third reduced screen as the additionally updated execution outcome. The electronic device may display the updated progress bar based on the increased playback time on the screen 2611b corresponding to the music application.

Based at least partially on the input, the electronic device may concurrently display the first reduced execution screen, the second reduced execution screen, the third reduced execution screen, and the graphical indication while the execution outcome of the third function is additionally updated. For example, the electronic device may display the playback time of 25 seconds as the updated execution outcome in the capsule UI 2603 in the single widget view 2615. The electronic device may display the playback time of 26 seconds as the updated execution outcome in the capsule UI 2603a in the multi-widget view 2620a. The electronic device may display the playback time of 30 seconds as the updated execution outcome in a capsule UI 2603c in the multi-widget view 2620b. The electronic device may display a graphical indication according to the additionally updated execution outcome together with other reduced execution screens.

For reference, an update cycle may vary depending on the application or function. The electronic device may update the execution outcome of the first function in a first cycle. The electronic device may update the execution outcome of the second function in a second cycle. The second cycle may be different form the first cycle.

The electronic device may receive another input to the third reduced execution screen while the first reduced execution screen, the second reduced execution screen, and the third reduced execution screen are concurrently displayed. The another input may be an input (e.g., a touch input) to select one of the reduced execution screens. Based at least partially on detecting two or more touch points away from each other received as at least a portion of the touch input in a group screen (e.g., the multi-widget view), the electronic device may display the first execution screen in the first size (e.g., the default size) instead of the group screen on the display. The electronic device may transition the screen from the multi-widget view 2620b to a single widget view 2611 corresponding to an arbitrary widget object selected based on an input 2693 (e.g., a tap input) that selects the widget object. The electronic device may continuously update data of first, fourth, fifth, and sixth applications while detecting an input (e.g., a touch input) that selects the first widget object.

Based at least partially on the another input, instead of the concurrently displayed first, second, and third reduced execution screens, the electronic device may display the third execution screen on the display. The electronic device may display the single widget view 2611 corresponding to the first widget object (e.g., the widget object corresponding to the music application). The electronic device may provide the execution outcome of the third function as additionally updated to the third execution screen. For example, in the single widget view 2611, the electronic device may display the execution outcome (e.g., the increased playback time) that is additionally updated from the third reduced execution screen (e.g., the screen 2611b) in the multi-widget view 2620b.

Based at least partially on the another input, the electronic device may display a graphical indication indicating a fourth execution screen corresponding to the fourth application on the third execution screen. The fourth application (e.g., the timer application) may be an application different from the third application (e.g., the music application). When the application displayed in the previous capsule UIs 2603a, 2603b, and 2603c is the same as the application of the current single widget view 2611 or duplicated execution is not allowed, the electronic device may replace an application to be displayed in a capsule UI 2604 For example, the electronic device may determine the application to be display in the capsule UI 2604 based on priority. The electronic device may select an application corresponding to a widget object with the highest priority among widget objects other than the widget object of the current single widget view 2611 in the arrangement sequence. The electronic device may display the selected application (e.g., the application corresponding to the fourth widget object) in the capsule UI 2604.

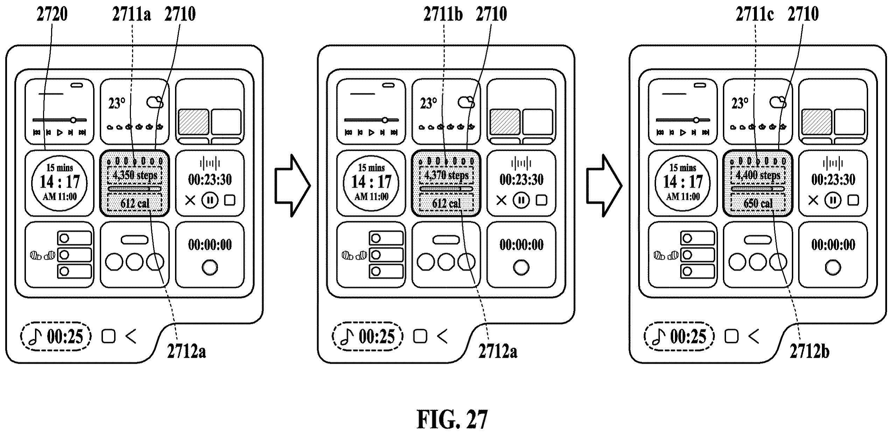

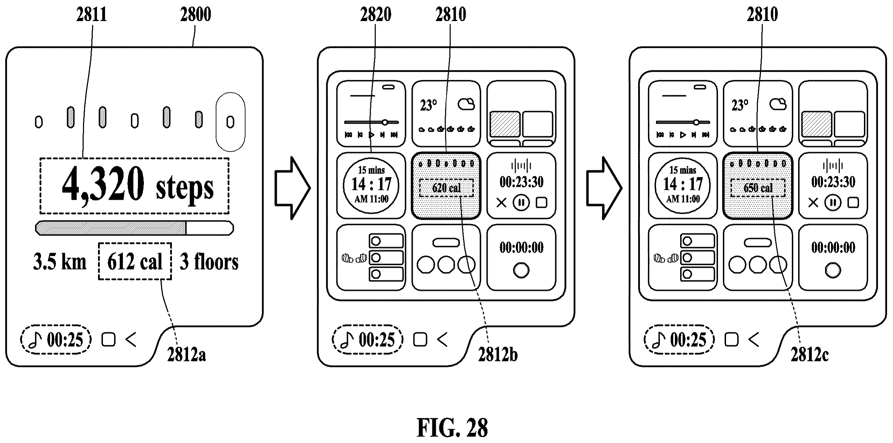

FIGS. 27 and 28 are diagrams illustrating screen updates in a multi-widget view according to various embodiments.

According to an embodiment, an electronic device (e.g., the electronic device 201 of FIG. 2) may display an updated execution outcome of each function on a reduced execution screen of an application having a plurality of functions. For example, as a part of an operation of displaying a first reduced execution screen and a second reduced execution screen, the electronic device may provide an execution outcome of a fourth function of one or more functions of the application as updated together with an additionally updated execution outcome of a first function. In the example illustrated in FIG. 27, the electronic device may concurrently display a first reduced execution screen 2710 of a health application and a second reduced execution screen 2720 of a timer application. As the execution outcome of the fourth function of the health application, the electronic device may display updated calories burned 2712a and 2712b together with updated step numbers 2711a, 2711b, and 2711c as the execution outcome of the first function.

The electronic device may update the execution outcome of the first function in a first cycle. The electronic device may update the execution outcome of the fourth function in a second cycle that is different from the first cycle. In the example illustrated in FIG. 27, the electronic device may update the step numbers 2711a, 2711b, and 2711c in the first cycle that is relatively short and may update the calories burned 2712a and 2712b in the second cycle that is relatively slow.

According to an embodiment, the electronic device may change the execution outcome displayed in the execution screen for the application having the plurality of functions according to the widget view. For example, in a single widget view 2800, the electronic device may display execution outcomes of the plurality of functions of the application together. The electronic device may provide an execution outcome 2811 (e.g., the step number) of the first function and an execution outcome 2812a (e.g., calories burned) of the fourth function in the single widget view 2800. In the operation of displaying the plurality of reduced execution screens, the electronic device may update and display execution outcomes of only some of the functions of the application. For example, as a part of the operation of concurrently displaying a first reduced execution screen 2810 and a second reduced execution screen 2820, the electronic device may provide the execution outcome of the fourth function of one or more functions as updated to the first reduced execution screen 2810 instead of the additionally updated execution outcome of the first function. In the example illustrated in FIG. 28, for the health application, the electronic device may display updated execution outcomes 2812b and 2812c (e.g., calories burned) of the fourth function on the first reduced execution screen 2810 instead of an additionally updated execution outcome (e.g., the step number) of the first function.

The electronic device may update the execution outcome of the first function in a first cycle. The electronic device may update the execution outcome of the fourth function in a second cycle that is different from the first cycle.

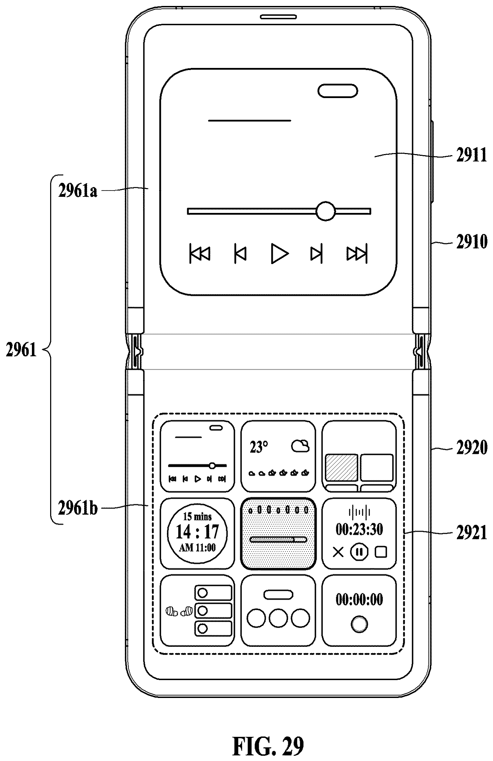

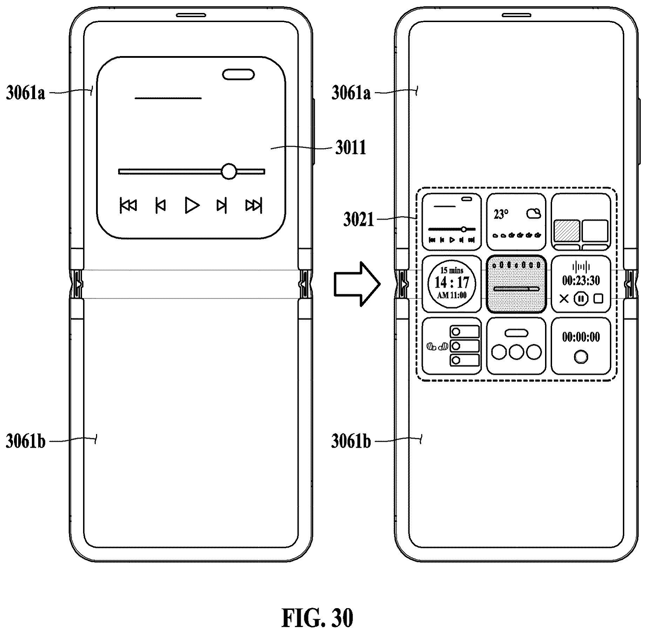

FIGS. 29 and 30 are diagrams illustrating outputting a multi-widget view in a foldable display according to various embodiments.

A housing of an electronic device (e.g., the electronic device 201 of FIGS. 2A and 2B) may include a first housing part 2910 and a second housing part 2920 that are set to be mutually folded and unfolded. A display of the electronic device may include a foldable display 2961 (e.g., the display 261 of FIGS. 2A and 2B) and a cover display (e.g., the sub-display 262 of FIGS. 2A and 2B). The foldable display 2961 may include a first display area 2961a corresponding to the first housing part 2910 and a second display area 2961b corresponding to the second housing part 2920. The cover display may be disposed in the opposite direction of the foldable display 2961 when the housing is unfolded.

The electronic device may perform an operation of displaying a first execution screen 2911 (e.g., the focused widget object) in a first size and an operation of displaying a group screen 2921 (e.g., the multi-widget view) via the cover display. The electronic device may refrain from displaying the first execution screen 2911 in the first size on the group screen 2921 while the group screen 2921 is displayed on the cover display. Instead, the electronic device may display a first reduced execution screen (e.g., the first execution screen 2911 reduced to a specified size) on the group screen 2921. For example, the electronic device may display the first execution screen in the first size on the cover display while the electronic device is folded. Based at least partially on the electronic device being at least partially unfolded within a specified time after a touch input (e.g., a pinch gesture on the focused widget object), the electronic device may display the group screen 2921 and a group screen 3021 on the first display area 2961a and a first display area 3061a or the second display area 2961b and a second display area 3061b other than the cover display.

In the example illustrated in FIG. 29, the electronic device may display the first execution screen 2911 in the first size through the first display area 2961a. The electronic device may display the group screen 2921 on the second display area 2961b of the foldable display 2961 other than the first display area 2961a. While the group screen 2921 is displayed on the second display area 2961b, the electronic device may keep displaying the first execution screen 2911 on the first display area 2961a and may refrain from displaying the first execution screen 2911 in the first size on the second display area 2961b.

In the example illustrated in FIG. 30, the electronic device may display a first execution screen 3011 in the first size through the first display area 3061a. The electronic device may display the group screen 3021 on the first display area 3061a and the second display area 3061b. While the group screen 3021 is displayed on the first display area 3061a and the second display area 3061b, the electronic device may refrain from displaying the first execution screen 3011 in the first size on the foldable display.

For reference, the gestures assigned to the operations described above may vary depending on settings. A gesture assigned to an operation may not overlap with gestures assigned to the other operations. For example, based on allocating an unpinch gesture to a layout change in the multi-widget view, the electronic device may cancel allocation of the unpinch gesture to other operations (e.g., adding a widget).

## Claims

1. An electronic device comprising:
a housing;
a display accommodated in the housing; and
a processor operatively connected to the display,
wherein the processor is configured to:
display a first execution screen 2615 corresponding to a first application on the display so that an execution outcome of a first function of one or more functions of the first application is presented as updated;
while the first execution screen 2615 is displayed on the display and a second execution screen corresponding to a second application is not displayed on the display, receive an input to the first execution screen 2615; and
based at least partially on the input, concurrently display a first reduced execution screen 2615a corresponding to the first execution screen 2615 and a second reduced execution screen 2614a corresponding to the second execution screen on the display,
wherein the concurrently displaying of the first reduced execution screen and the second reduced execution screen comprises providing the execution outcome of the first function as additionally updated to the first reduced execution screen.

2. The electronic device of claim 1,
wherein the processor is configured to:
as a part of the concurrently displaying of the first reduced execution screen and the second reduced execution screen, provide an execution outcome of a second function of one or more functions of the second application as updated to the second reduced screen.

3. The electronic device of claim 2,
wherein the processor is configured to:
update the execution outcome of the first function in a first cycle; and
update the execution outcome of the second function in a second cycle that is different from the first cycle.

4. The electronic device of any one of claims 1 to 3,
wherein the processor is further configured to, before receiving the input, display a graphical indication indicating a third execution screen corresponding to a third application on the first execution screen, wherein the graphical indication is displayed on the display before the first execution screen,
wherein the displaying of the graphical indication comprises displaying an execution outcome of a third function of one or more functions of the third application in background as updated on the display.

5. The electronic device of claim 4,
wherein the processor is further configured to, based at least partially on the input, instead of the first execution screen, display a third reduced execution screen corresponding to the third execution screen concurrently with the first reduced execution screen and the second reduced execution screen,
wherein the displaying of the third reduced execution screen comprises providing the execution outcome of the third function as additionally updated to the third reduced execution screen.

6. The electronic device of claim 5,
wherein the processor is further configured to, based at least partially on the input, display the graphical indication while the execution outcome of the third function is additionally updated, concurrently with the first reduced execution screen, the second reduced execution screen, and the third reduced execution screen.

7. The electronic device of claim 5,
wherein the processor is further configured to:
receive another input to the third reduced execution screen while the first reduced execution screen, the second reduced execution screen, and the third reduced execution screens are concurrently displayed; and
based at least partially on the another input, display the third execution screen on the display instead of the concurrently displayed first reduced execution screen, the second reduced execution screen, and the third reduced execution screen,
wherein the displaying of the third execution screen further comprises providing the execution outcome of the third function as additionally updated to the third execution screen.

8. The electronic device of claim 7,
wherein the processor is further configured to, based at least partially on the another input, display a graphical indication indicating a fourth execution screen corresponding to a fourth application on the third execution screen.

9. The electronic device of any one of claims 1 to 8,
wherein the processor is further configured to:
identify a pinch zoom-out touch to the first execution screen as the input; and
when the pinch zoom-out touch corresponds to a specified range, display the first execution screen as a size of the first execution screen is reduced from a first size to a second size that is smaller than the first size.

10. The electronic device of claim 9,
wherein the first application and the second application are respectively assigned to a first arrangement order and a second arrangement order that is different from the first arrangement order of arrangement orders with respect to a group of applications for a screen of the display, wherein the processor is further configured to:
display the first reduced execution screen at a first arrangement position corresponding to the first arrangement order on the screen of the display; after the first reduced execution screen is displayed, display a movement of the second reduced execution screen to a second arrangement position corresponding to the second arrangement order.

11. The electronic device of any one of claims 1 to 10,
wherein the processor is further configured to:
display a widget view corresponding to the first application as the first execution screen; and
display a widget view corresponding to the second application as the second execution screen.

12. The electronic device of any one of claims 1 to 11,
wherein the processor is further configured to, as a part of the concurrently displaying of the first reduced execution screen and the second reduced execution screen, while an execution outcome of a fourth function of the one or more functions is updated, provide the execution outcome of the fourth function together with the additionally updated execution outcome of the first function to the first reduced execution screen.

13. The electronic device of claim 12,
wherein the processor is further configured to:
update the execution outcome of the first function in a first cycle; and
update the execution outcome of the fourth function in a second cycle that is different from the first cycle.

14. The electronic device of any one of claims 1 to 13,
wherein the processor is further configured to, as a part of the concurrently displaying of the first reduced execution screen and the second reduced execution screen, while an execution outcome of a fourth function of the one or more functions is updated, provide the execution outcome of the fourth function instead of the additionally updated execution outcome of the first function to the first reduced execution screen.

15. The electronic device of claim 14,
wherein the processor is further configured to:
update the execution outcome of the first function in a first cycle; and
update the execution outcome of the fourth function in a second cycle that is different from the first cycle.
